# EUROPEAN PATENT APPLICATION

(11) **EP 4 783 113 A2**
(43) Date of publication of application: **29.07.2026**
(21) Application number: 26185652.0
(22) Date of filing: 17.06.2026
(51) Int. Cl.: G06T 7/00

(54) **SYSTEMS AND METHODS FOR PROXY-BASED INSPECTION**

(71) Applicant: ASML Netherlands B.V., 5500 AH Veldhoven (NL)
(72) Inventor: ZHANG, Datong, San Jose, 95134 (US); LO, Chih-Hsin, San Jose, 95134 (US); WIELAND, Marco Jan-Jaco, 5500 AH Veldhoven (NL); YANG, Ming-Yang, San Jose, 95134 (US)
(74) Representative: ASML Netherlands B.V.

(57) **Abstract**

Systems and methods for inspection, including analyzing layout data related to a sample to determine connectivity between features on the sample; determining that inspection should be performed on a first feature and a second feature based on the determined connectivity, the inspection comprising comparing a grey level value (GLV) of the first feature to a GLV of the second feature using a voltage contrast image of the first and second features; and determining, based on the comparison, whether a defect associated with the first feature and the second feature is present.

## Description

### FIELD

The description herein relates to the field of charged particle systems, and more particularly to methods for inspection in a charged particle system.

### BACKGROUND

In manufacturing processes of integrated circuits (ICs), unfinished or finished circuit components are inspected to ensure that they are manufactured according to design and are free of defects. An inspection system utilizing an optical microscope typically has resolution down to a few hundred nanometers; and the resolution is limited by the wavelength of light. As the physical sizes of IC components continue to reduce down to sub-100 or even sub-10 nanometers, inspection systems capable of higher resolution than those utilizing optical microscopes are needed.

A charged particle (e.g., electron) beam microscope, such as a scanning electron microscope (SEM) or a transmission electron microscope (TEM), capable of resolution down to less than a nanometer, serves as a practicable tool for inspecting IC components having a feature size that is sub-100 nanometers. With a SEM, electrons of a single primary electron beam, or electrons of a plurality of primary electron beams, can be focused on locations of interest of a wafer under inspection. The primary electrons interact with the wafer and may be backscattered or may cause the wafer to emit secondary electrons. The intensity of the electron beams comprising the backscattered electrons and the secondary electrons may vary based on the properties of the internal and external structures of the wafer, and thereby may indicate whether the wafer has defects.

### SUMMARY

Embodiments of the present disclosure include systems, methods, and non-transitory computer readable mediums that store a set of instructions that is executable by at least one processor of a computing device to cause the computing device to perform operations for inspection. The operations include based on an analysis of layout data, determining connectivity between features on a sample; based on the determined connectivity, determining whether to perform inspection on a first feature and a second feature; based on a determination that inspection should be performed on the first feature and the second feature, performing inspection on the first feature and the second feature by: obtaining a voltage contrast image of the first and second features; comparing a grey level value (GLV) of the first feature to a GLV of the second feature using the voltage contrast image; and determining, based on the comparison, whether there is a presence of a defect among the first feature or the second feature.

Embodiments of the present disclosure further include based on an analysis of layout data, determining connectivity between features on a sample; based on the determined connectivity, determining whether to perform proxy-based voltage contrast inspection on a first feature and a second feature; based on a determination that inspection should be performed on the first feature and the second feature, performing a first inspection on the first feature and the second feature at a first condition by: obtaining a first voltage contrast image of the first and second features; and comparing a first grey level value (GLV) of the first feature to a first GLV of the second feature using the first voltage contrast image; based on a determination that the first GLV of the first feature is within a first tolerance range of the first GLV of the second feature, performing a second inspection on the first feature and the second feature at a second condition by: obtaining a second voltage contrast image of the first and second features; and comparing a second GLV of the first feature to a second GLV of the second feature using the second voltage contrast image; and based on a determination that the second GLV of the first feature is within a second tolerance range of the second GLV of the second feature, determining whether there is a presence of a defect among the first feature or the second feature.

Embodiments of the present disclosure further include analyzing layout data related to a sample to determine connectivity between features on the sample; determining that inspection should be performed on a first feature and a second feature based on the determined connectivity, the inspection comprising: comparing a grey level value (GLV) of the first feature to a GLV of the second feature using a voltage contrast image of the first and second features; and determining, based on the comparison, whether a defect associated with the first feature and the second feature is present.

Embodiments of the present disclosure further include analyzing layout data related to a sample to determine connectivity between features on the sample; determining that inspection should be performed on a first feature and a second feature based on the determined connectivity, the inspection comprising: comparing a first GLV of the first feature to a first GLV of the second feature using a first voltage contrast image of the first and second features obtained at a first condition; based on the comparison, obtaining a second voltage contrast image of the sample at a second condition; comparing a second GLV of the first feature to a second GLV of the second feature; and determining, based on the comparison of the second GLV of the first feature to the second GLV of the second feature, whether a defect associated with the first feature and the second feature is present.

Embodiments of the present disclosure further include determining a relationship between points of interest (POIs), wherein the POIs are based on layout data that represents a sample; determining grey level values (GLVs) of the POIs; and determining, based on the GLVs and the relationship, a presence of a defect.

### BRIEF DESCRIPTION OF THE DRAWINGS

**Fig. 1** is a schematic diagram illustrating an exemplary electron beam inspection (EBI) system, consistent with embodiments of the present disclosure.
**Fig. 2A** is a schematic diagram illustrating an exemplary multi-beam system that is part of the exemplary charged particle beam inspection system of **Fig. 1****,** consistent with embodiments of the present disclosure.
**Fig. 2B** is a schematic diagram illustrating an exemplary single-beam system that is part of the exemplary charged particle beam inspection system of **Fig. 1****,** consistent with embodiments of the present disclosure.
**Fig. 3** shows an exemplary graph showing a yield rate of total electrons (secondary electrons and backscattered electrons) relative to landing energy of primary electron beamlets, consistent with embodiments of the present disclosure.
**Fig. 4** shows a schematic diagram illustrating an exemplary voltage contrast response of a wafer, consistent with embodiments of the present disclosure.
**Fig. 5** shows an example layout design of a sample, consistent with embodiments of the present disclosure.
**Fig. 6** shows an example layout design of a sample and an example voltage contrast image 630 of the sample, consistent with embodiments of the present disclosure.
**Fig. 7A** shows example voltage contrast images and inspection results obtained from existing inspection methods. **Fig. 7B** shows an example voltage contrast image and inspection results, consistent with embodiments of the present disclosure.
**Figs. 8A** and **8B** show example voltage contrast images illustrating single and cluster proxy-based voltage contrast inspection, consistent with embodiments of the present disclosure.
**Fig. 9** shows an example voltage contrast image, consistent with embodiments of the present disclosure.
**Fig. 10** shows an example process of cascade proxy-based voltage contrast inspection, consistent with embodiments of the present disclosure.
**Fig. 11** shows cross-sectional diagrams of samples with features and their corresponding GLVs from voltage contrast images during cascade proxy-based voltage contrast inspection, consistent with embodiments of the present disclosure.
**Fig. 12** shows an example process for proxy-based voltage contrast inspection, consistent with embodiments of the present disclosure.
**Fig. 13** shows an example process for proxy-based voltage contrast inspection, consistent with embodiments of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the subject matter recited in the appended claims. For example, although some embodiments are described in the context of utilizing electron beams, the disclosure is not so limited. Other types of charged particle beams may be similarly applied. Furthermore, other imaging systems may be used, such as optical imaging, photodetection, x-ray detection, extreme ultraviolet inspection, deep ultraviolet inspection, or the like, in which they generate corresponding types of images.

Electronic devices are constructed of circuits formed on a piece of silicon (or other materials such as GaAs) called a substrate. Many circuits may be formed together on the same piece of silicon and are called integrated circuits or ICs. The size of these circuits has decreased dramatically so that many more of them can fit on the substrate. For example, an IC chip in a smart phone can be as small as a thumbnail and yet may include over 2 billion transistors, the size of each transistor being less than 1/1000th the size of a human hair.

Making these extremely small ICs is a complex, time-consuming, and expensive process, often involving hundreds of individual steps. Errors in even one step have the potential to result in defects in the finished IC rendering it useless. Thus, one goal of the manufacturing process is to avoid such defects to maximize the number of functional ICs made in the process, that is, to improve the overall yield of the process.

One component of improving yield is monitoring the chip making process to ensure that it is producing a sufficient number of functional ICs. One way to monitor the process is to inspect the chip circuit structures at various stages of their formation. Inspection may be carried out using a scanning electron microscope (SEM). A SEM can be used to image these extremely small structures, in effect, taking a "picture" of the structures of the wafer. The image can be used to determine if the structure was formed properly, and also if it was formed at the proper location. If the structure is defective, then the process can be adjusted so the defect is less likely to recur. Defects may be generated during various stages of semiconductor processing. For the reason stated above, it is important to find defects accurately and efficiently as early as possible.

The working principle of a SEM is similar to a camera. A camera takes a picture by receiving and recording brightness and colors of light reflected or emitted from people or objects. A SEM takes a "picture" by receiving and recording energies or quantities of electrons reflected or emitted from the structures. Before taking such a "picture," an electron beam may be projected onto the structures, and when the electrons are reflected or emitted ("exiting") from the structures, a detector of the SEM may receive and record the energies or quantities of those electrons to generate an image. To take such a "picture," some SEMs use a single electron beam (referred to as a "single-beam SEM"), while some SEMs use multiple electron beams (referred to as a "multi-beam SEM") to take multiple "pictures" of the wafer. By using multiple electron beams, the SEM may project more electron beams onto the structures for obtaining these multiple "pictures," resulting in more electrons exiting from the structures. Accordingly, the detector may receive more exiting electrons simultaneously, and generate images of the structures of the wafer with a higher efficiency and a faster speed. A SEM can be used to image ICs after they are manufactured.

Generating and processing these images to determine whether any defects exist (sometimes as small as the nanometer scale) is computationally intensive and as the physical sizes of IC components continue to shrink, accuracy and yield in defect detection become more important. To inspect a single wafer, it is not uncommon for an inspection system to generate and process a substantial number of images. For example, if each image taken corresponds to 12 µm × 12 µm portion of a wafer, for a 200mm wafer, it would take over 218 million images to image the entire wafer. If these images are not processed and evaluated efficiently, not surprisingly, yield will be dramatically impacted, thereby affecting the wafer throughput.

One difference between a SEM and a camera is that in a camera, the whole region that is observed is illuminated with light and the sample is imaged with a lens on a sensor with many pixels. An image is obtained by reading out all the pixels. In a SEM, the detector need not have pixels, as the electron beam is focused onto a tiny (e.g., nanometer-sized) spot that is scanned over the sample. The "picture" made with a SEM is an XY plot (e.g., scatter plot) of signal as a function of beam position. In a SEM, there are no lenses that focus signal from the sample onto the detector.

Inspecting certain layers in the process of chip manufacturing is crucial to chip manufacturing, especially for parts known as the "middle-end-of-line" or MEOL, because this is where problems, such as defects, are most likely to ruin the chip. These problems can include tiny errors in how different parts of the chip connect, overlaps between contacts, or damage to thin protective layers. To catch these problems and improve the number of working chips manufactured, a method called voltage contrast (VC) inspection is used. VC inspection works like taking a special picture of a chip using an electron microscope, where differences in electrical properties help highlight defects.

However, as chip designs become smaller and more advanced, it becomes more difficult for the inspection system to reliably spot real problems. One issue is that the electrical resistance (how easily electricity flows) can change a lot depending on where one looks on the chip. This makes it difficult for the inspection system to tell the difference between an actual defect and normal variations, resulting in many false alarms, or "nuisance" reports.

Several methods are used to compare measurements and find defects, but each has its own problems.

Die-to-die detection (random mode): This method compares one chip (die) to another. But if the electrical signals (shown as "grey level values" or GLVs in the images) naturally vary from chip to chip, the system may falsely report these normal differences as defects, leading to millions of incorrect reports.

Cell-to-cell detection (array mode): This method compares repeating units within the chip, which works for certain patterns like memory cells. However, even small, normal differences between cells can again cause many false defect reports.

Die-to-database detection: Here, the system compares the chip to a pre-set "normal" value in a database. If the threshold for what counts as normal is set too strictly, it causes millions of false alarms. Even if the threshold is adjusted automatically, small natural variations in the chip often still lead to many nuisances.

In summary, while these inspection methods are designed to catch real problems, their sensitivity to normal differences in the chip often causes them to report far more issues than actually exist, making it more difficult and more costly to reliably produce good chips.

A common constraint of existing methods of inspection is that the reported defects are based on the same type of contact comparison. For example, a gate contact may be compared to the same gate contact in the next period, the next die, or to the GDS of this type of gate contact. Therefore, any variation in this gate contact will result in it being reported outside of the normal range (e.g., the GLV will be away from the normal distribution center) and being reported as a defect.

A typical single beam inspection for gate voltage to drain voltage (Vg-to-Vd) shorts will report on the order of 10,000 to 100,000 defects per 2-4 hours of recipe. Out of these reported defects, less than 100, or even less than 50, are true defects. The >99.9% nuisance is typically filtered out by a complicated defect classification methods, including automated techniques for defect classification, and other filtering methods. The nuisance rate/count sky rockets for multi-beam inspection. For example, multi-beam inspection may include a million-level nuisance count during a normal recipe. Determining the true defects from the raw results can be challenging and inaccurate, which leads to critical tool adoption concerns and high operation costs.

The disclosed embodiments provide systems and methods that address some or all of these disadvantages by providing a method of inspection, including determining whether to perform a proxy-based voltage contrast inspection on a feature of interest and performing the inspection based on a determination that it should be performed. For example, the method may include determining to perform a proxy-based voltage contrast inspection on a feature of interest if a short (e.g., physical or electrical) between the feature of interest and a neighbor feature would be considered a defect. The feature of interest and its proxy may be different types of features. For example, a feature of interest may be a gate. The proxy of a gate short to source/drain may be the source/drain. When a gate and a source/drain are shorted, the grey level value (GLV) of the gate should be the same or close to the same as the GLV of the source/drain. Therefore, in this example, if the GLV of the feature and the GLV of its proxy are similar, there is a high likelihood that a defect exists. Advantageously, die-to-die variation does not impact defect detection in proxy-based voltage contrast inspection.

As used herein, components that are "coupled" may be "communicatively coupled."

Relative dimensions of components in drawings may be exaggerated for clarity. Within the following description of drawings, the same or like reference numbers refer to the same or like components or entities, and only the differences with respect to the individual embodiments are described.

As used herein, unless specifically stated otherwise, the term "or" encompasses all possible combinations, except where infeasible. For example, if it is stated that a component may include A or B, then, unless specifically stated otherwise or infeasible, the component may include A, or B, or A and B. As a second example, if it is stated that a component may include A, B, or C, then, unless specifically stated otherwise or infeasible, the component may include A, or B, or C, or A and B, or A and C, or B and C, or A and B and C.

Without limiting the scope of the present disclosure, some embodiments may be described in the context of providing detectors and detection methods in systems utilizing electron beams. However, the disclosure is not so limited. Other types of charged particle beams may be similarly applied. Furthermore, systems and methods for detection may be used in other imaging systems, such as optical imaging, photon detection, x-ray detection, ion detection, etc.

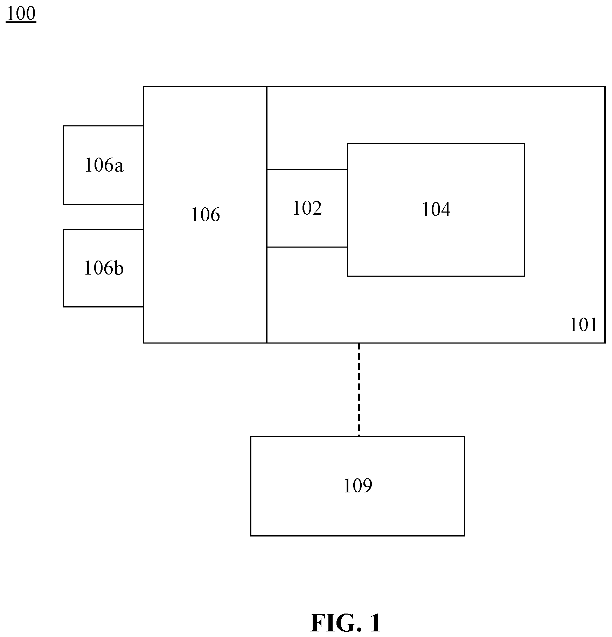

Fig. 1 illustrates an exemplary electron beam inspection (EBI) system 100 consistent with embodiments of the present disclosure. EBI system 100 may be used for imaging. As shown in Fig. 1, EBI system 100 includes a main chamber 101, a load/lock chamber 102, an electron beam tool 104, and an equipment front end module (EFEM) 106. Electron beam tool 104 is located within main chamber 101. EFEM 106 includes a first loading port 106a and a second loading port 106b. EFEM 106 may include additional loading port(s). First loading port 106a and second loading port 106b receive wafer front opening unified pods (FOUPs) that contain wafers (e.g., semiconductor wafers or wafers made of other material(s)) or samples to be inspected (wafers and samples may be used interchangeably). A "lot" is a plurality of wafers that may be loaded for processing as a batch.

One or more robotic arms (not shown) in EFEM 106 may transport the wafers to load/lock chamber 102. Load/lock chamber 102 is connected to a load/lock vacuum pump system (not shown) which removes gas molecules in load/lock chamber 102 to reach a first pressure below the atmospheric pressure. After reaching the first pressure, one or more robotic arms (not shown) may transport the wafer from load/lock chamber 102 to main chamber 101. Main chamber 101 is connected to a main chamber vacuum pump system (not shown) which removes gas molecules in main chamber 101 to reach a second pressure below the first pressure. After reaching the second pressure, the wafer is subject to inspection by electron beam tool 104. Electron beam tool 104 may be a single-beam system or a multi-beam system.

A controller 109 is electronically connected to electron beam tool 104. Controller 109 may be a computer configured to execute various controls of EBI system 100. While controller 109 is shown in **Fig. 1** as being outside of the structure that includes main chamber 101, load/lock chamber 102, and EFEM 106, it is appreciated that controller 109 may be a part of the structure.

In some embodiments, controller 109 may include one or more processors (not shown) of a processing system. A processor may be a generic or specific electronic device capable of manipulating or processing information. For example, the processing system may include any combination of any number of processors, such as a central processing unit (or "CPU"), a graphics processing unit (or "GPU"), an optical processor, a programmable logic controllers, a microcontroller, a microprocessor, a digital signal processor, an intellectual property (IP) core, a Programmable Logic Array (PLA), a Programmable Array Logic (PAL), a Generic Array Logic (GAL), a Complex Programmable Logic Device (CPLD), a Field-Programmable Gate Array (FPGA), a System On Chip (SoC), an Application-Specific Integrated Circuit (ASIC), and any type circuit capable of data processing. The processor may also be a virtual processor that includes one or more processors distributed across multiple machines or devices coupled via a network.

In some embodiments, controller 109 may further include one or more memories (not shown). A memory may be a generic or specific electronic device capable of storing codes and data accessible by the processor (e.g., via a bus). For example, the memory may include any combination of any number of a random-access memory (RAM), a read-only memory (ROM), an optical disc, a magnetic disk, a hard drive, a solid-state drive, a flash drive, a security digital (SD) card, a memory stick, a compact flash (CF) card, or any type of storage device. The codes may include an operating system (OS) and one or more application programs (or "apps") for specific tasks. The memory may also be a virtual memory that includes one or more memories distributed across multiple machines or devices coupled via a network.

Embodiments of this disclosure may provide a single charged-particle beam imaging system ("single-beam system"). Compared with a single-beam system, a multiple charged-particle beam imaging system ("multi-beam system") may be designed to optimize throughput for different scan modes. Embodiments of this disclosure provide a multi-beam system with the capability of optimizing throughput for different scan modes by using beam arrays with different geometries and adapting to different throughputs and resolution requirements.

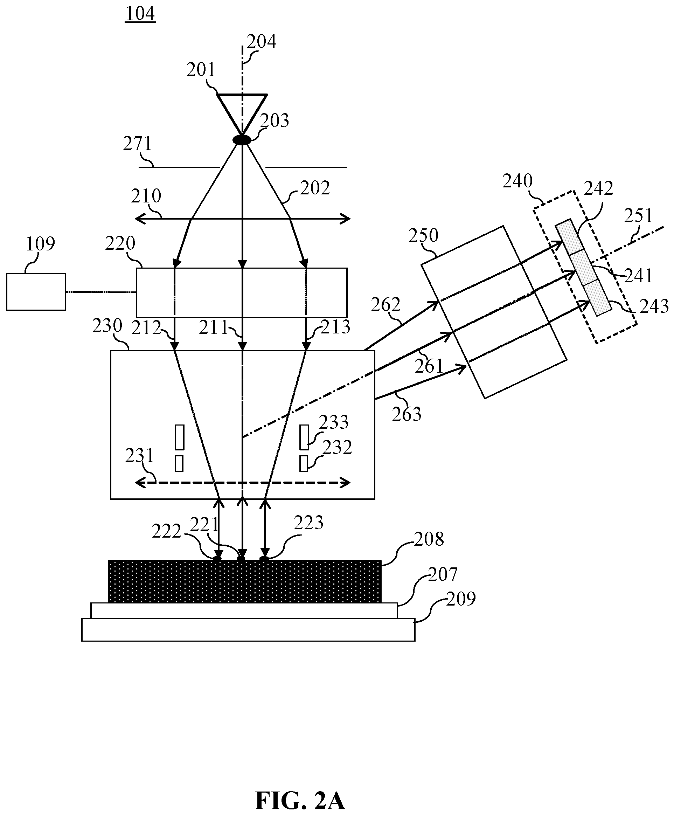

Reference is now made to **Fig. 2A****,** which is a schematic diagram illustrating an exemplary electron beam tool 104 including a multi-beam inspection tool that is part of the EBI system 100 of **Fig. 1****,** consistent with embodiments of the present disclosure. In some embodiments, electron beam tool 104 may be operated as a single-beam inspection tool that is part of EBI system 100 of **Fig. 1****.** Multi-beam electron beam tool 104 (also referred to herein as apparatus 104) comprises an electron source 201, a Coulomb aperture plate (or "gun aperture plate") 271, a condenser lens 210, a source conversion unit 220, a primary projection system 230, a motorized stage 209, and a sample holder 207 supported by motorized stage 209 to hold a sample 208 (e.g., a wafer or a photomask) to be inspected. Multi-beam electron beam tool 104 may further comprise a secondary projection system 250 and an electron detection device 240. Primary projection system 230 may comprise an objective lens 231. Electron detection device 240 may comprise a plurality of detection elements 241, 242, and 243. A beam separator 233 and a deflection scanning unit 232 may be positioned inside primary projection system 230.

Electron source 201, Coulomb aperture plate 271, condenser lens 210, source conversion unit 220, beam separator 233, deflection scanning unit 232, and primary projection system 230 may be aligned with a primary optical axis 204 of apparatus 104. Secondary projection system 250 and electron detection device 240 may be aligned with a secondary optical axis 251 of apparatus 104.

Electron source 201 may comprise a cathode (not shown) and an extractor or anode (not shown), in which, during operation, electron source 201 is configured to emit primary electrons from the cathode and the primary electrons are extracted or accelerated by the extractor and/or the anode to form a primary electron beam 202 that form a primary beam crossover (virtual or real) 203. Primary electron beam 202 may be visualized as being emitted from primary beam crossover 203.

Source conversion unit 220 may comprise an image-forming element array (not shown), an aberration compensator array (not shown), a beam-limit aperture array (not shown), and a pre-bending micro-deflector array (not shown). In some embodiments, the pre-bending micro-deflector array deflects a plurality of primary beamlets 211, 212, 213 of primary electron beam 202 to normally enter the beam-limit aperture array, the image-forming element array, and an aberration compensator array. In some embodiments, apparatus 104 may be operated as a single-beam system such that a single primary beamlet is generated. In some embodiments, condenser lens 210 is designed to focus primary electron beam 202 to become a parallel beam and be normally incident onto source conversion unit 220. The image-forming element array may comprise a plurality of micro-deflectors or micro-lenses to influence the plurality of primary beamlets 211, 212, 213 of primary electron beam 202 and to form a plurality of parallel images (virtual or real) of primary beam crossover 203, one for each of the primary beamlets 211, 212, and 213. In some embodiments, the aberration compensator array may comprise a field curvature compensator array (not shown) and an astigmatism compensator array (not shown). The field curvature compensator array may comprise a plurality of micro-lenses to compensate field curvature aberrations of the primary beamlets 211, 212, and 213. The astigmatism compensator array may comprise a plurality of micro-stigmators to compensate astigmatism aberrations of the primary beamlets 211, 212, and 213. The beam-limit aperture array may be configured to limit diameters of individual primary beamlets 211, 212, and 213. **Fig. 2A** shows three primary beamlets 211, 212, and 213 as an example, and it is appreciated that source conversion unit 220 may be configured to form any number of primary beamlets. Controller 109 may be connected to various parts of EBI system 100 of **Fig. 1****,** such as source conversion unit 220, electron detection device 240, primary projection system 230, or motorized stage 209. In some embodiments, as explained in further details below, controller 109 may perform various image and signal processing functions. Controller 109 may also generate various control signals to govern operations of the charged particle beam inspection system.

Condenser lens 210 is configured to focus primary electron beam 202. Condenser lens 210 may further be configured to adjust electric currents of primary beamlets 211, 212, and 213 downstream of source conversion unit 220 by varying the focusing power of condenser lens 210. Alternatively, the electric currents may be changed by altering the radial sizes of beam-limit apertures within the beam-limit aperture array corresponding to the individual primary beamlets. The electric currents may be changed by both altering the radial sizes of beam-limit apertures and the focusing power of condenser lens 210. Condenser lens 210 may be an adjustable condenser lens that may be configured so that the position of its first principal plane is movable. The adjustable condenser lens may be configured to be magnetic, which may result in off-axis beamlets 212 and 213 illuminating source conversion unit 220 with rotation angles. The rotation angles change with the focusing power or the position of the first principal plane of the adjustable condenser lens. Condenser lens 210 may be an anti-rotation condenser lens that may be configured to keep the rotation angles unchanged while the focusing power of condenser lens 210 is changed. In some embodiments, condenser lens 210 may be an adjustable anti-rotation condenser lens, in which the rotation angles do not change when its focusing power and the position of its first principal plane are varied.

Objective lens 231 may be configured to focus beamlets 211, 212, and 213 onto a sample 208 for inspection and may form, in the current embodiments, three probe spots 221, 222, and 223 on the surface of sample 208. Coulomb aperture plate 271, in operation, is configured to block off peripheral electrons of primary electron beam 202 to reduce Coulomb effect. The Coulomb effect may enlarge the size of each of probe spots 221, 222, and 223 of primary beamlets 211, 212, 213, and therefore deteriorate inspection resolution.

Beam separator 233 may, for example, be a Wien filter comprising an electrostatic deflector generating an electrostatic dipole field and a magnetic dipole field (not shown in **Fig. 2A**). In operation, beam separator 233 may be configured to exert an electrostatic force by electrostatic dipole field on individual electrons of primary beamlets 211, 212, and 213. The electrostatic force is equal in magnitude but opposite in direction to the magnetic force exerted by magnetic dipole field of beam separator 233 on the individual electrons. Primary beamlets 211, 212, and 213 may therefore pass at least substantially straight through beam separator 233 with at least substantially zero deflection angles.

Deflection scanning unit 232, in operation, is configured to deflect primary beamlets 211, 212, and 213 to scan probe spots 221, 222, and 223 across individual scanning areas in a section of the surface of sample 208. In response to incidence of primary beamlets 211, 212, and 213 or probe spots 221, 222, and 223 on sample 208, electrons emerge from sample 208 and generate three secondary electron beams 261, 262, and 263. Each of secondary electron beams 261, 262, and 263 typically comprise secondary electrons (having electron energy ≤ 50eV) and backscattered electrons (having electron energy between 50eV and the landing energy of primary beamlets 211, 212, and 213). Beam separator 233 is configured to deflect secondary electron beams 261, 262, and 263 towards secondary projection system 250. Secondary projection system 250 subsequently focuses secondary electron beams 261, 262, and 263 onto detection elements 241, 242, and 243 of electron detection device 240. Detection elements 241, 242, and 243 are arranged to detect corresponding secondary electron beams 261, 262, and 263 and generate corresponding signals which are sent to controller 109 or a signal processing system (not shown), e.g., to construct images of the corresponding scanned areas of sample 208.

In some embodiments, detection elements 241, 242, and 243 detect corresponding secondary electron beams 261, 262, and 263, respectively, and generate corresponding intensity signal outputs (not shown) to an image processing system (e.g., controller 109). In some embodiments, each detection element 241, 242, and 243 may comprise one or more pixels. The intensity signal output of a detection element may be a sum of signals generated by all the pixels within the detection element.

In some embodiments, controller 109 may comprise image processing system that includes an image acquirer (not shown), a storage (not shown). The image acquirer may comprise one or more processors. For example, the image acquirer may comprise a computer, server, mainframe host, terminals, personal computer, any kind of mobile computing devices, and the like, or a combination thereof. The image acquirer may be communicatively coupled to electron detection device 240 of apparatus 104 through a medium such as an electrical conductor, optical fiber cable, portable storage media, IR, Bluetooth, internet, wireless network, wireless radio, among others, or a combination thereof. In some embodiments, the image acquirer may receive a signal from electron detection device 240 and may construct an image. The image acquirer may thus acquire images of sample 208. The image acquirer may also perform various post-processing functions, such as generating contours, superimposing indicators on an acquired image, and the like. The image acquirer may be configured to perform adjustments of brightness and contrast, etc. of acquired images. In some embodiments, the storage may be a storage medium such as a hard disk, flash drive, cloud storage, random access memory (RAM), other types of computer readable memory, and the like. The storage may be coupled with the image acquirer and may be used for saving scanned raw image data as original images, and post-processed images.

In some embodiments, the image acquirer may acquire one or more images of a sample based on an imaging signal received from electron detection device 240. An imaging signal may correspond to a scanning operation for conducting charged particle imaging. An acquired image may be a single image comprising a plurality of imaging areas. The single image may be stored in the storage. The single image may be an original image that may be divided into a plurality of regions. Each of the regions may comprise one imaging area containing a feature of sample 208. The acquired images may comprise multiple images of a single imaging area of sample 208 sampled multiple times over a time sequence. The multiple images may be stored in the storage. In some embodiments, controller 109 may be configured to perform image processing steps with the multiple images of the same location of sample 208.

In some embodiments, controller 109 may include measurement circuitries (e.g., analog-to-digital converters) to obtain a distribution of the detected secondary electrons. The electron distribution data collected during a detection time window, in combination with corresponding scan path data of each of primary beamlets 211, 212, and 213 incident on the wafer surface, can be used to reconstruct images of the wafer structures under inspection. The reconstructed images can be used to reveal various features of the internal or external structures of sample 208, and thereby can be used to reveal any defects that may exist in the wafer.

In some embodiments, controller 109 may control motorized stage 209 to move sample 208 during inspection of sample 208. In some embodiments, controller 109 may enable motorized stage 209 to move sample 208 in a direction continuously at a constant speed. In other embodiments, controller 109 may enable motorized stage 209 to change the speed of the movement of sample 208 over time depending on the steps of scanning process.

Although **Fig. 2A** shows that apparatus 104 uses three primary electron beams, it is appreciated that apparatus 104 may use one, two, or more number of primary electron beams. The present disclosure does not limit the number of primary electron beams used in apparatus 104. In some embodiments, apparatus 104 may be a SEM used for lithography. In some embodiments, electron beam tool 104 may be a single-beam system or a multi-beam system.

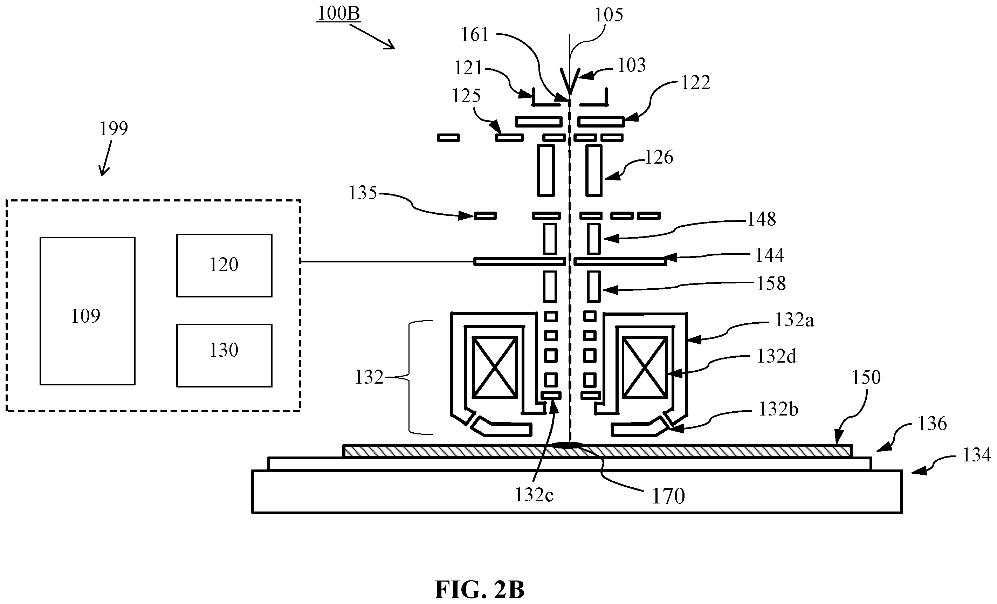

For example, as shown in **Fig. 2B****,** an electron beam tool 100B (also referred to herein as apparatus 100B) may be a single-beam inspection tool that is used in EBI system 100, consistent with embodiments of the present disclosure. Apparatus 100B includes a wafer holder 136 supported by motorized stage 134 to hold a wafer 150 to be inspected. Electron beam tool 100B includes an electron emitter, which may comprise a cathode 103, an anode 121, and a gun aperture 122. Electron beam tool 100B further includes a beam limit aperture 125, a condenser lens 126, a column aperture 135, an objective lens assembly 132, and a detector 144. Objective lens assembly 132, in some embodiments, may be a modified SORIL lens, which includes a pole piece 132a, a control electrode 132b, a deflector 132c, and an exciting coil 132d. In an imaging process, an electron beam 161 emanating from the tip of cathode 103 may be accelerated by anode 121 voltage, pass through gun aperture 122, beam limit aperture 125, condenser lens 126, and be focused into a probe spot 170 by the modified SORIL lens and impinge onto the surface of wafer 150. Probe spot 170 may be scanned across the surface of wafer 150 by a deflector, such as deflector 132c or other deflectors in the SORIL lens. Secondary or scattered primary particles, such as secondary electrons or scattered primary electrons emanated from the wafer surface may be collected by detector 144 to determine intensity of the beam and so that an image of an area of interest on wafer 150 may be reconstructed.

There may also be provided an image processing system 199 that includes an image acquirer 120, a storage 130, and controller 109. Image acquirer 120 may comprise one or more processors. For example, image acquirer 120 may comprise a computer, server, mainframe host, terminals, personal computer, any kind of mobile computing devices, and the like, or a combination thereof. Image acquirer 120 may connect with detector 144 of electron beam tool 100B through a medium such as an electrical conductor, optical fiber cable, portable storage media, IR, Bluetooth, internet, wireless network, wireless radio, or a combination thereof. Image acquirer 120 may receive a signal from detector 144 and may construct an image. Image acquirer 120 may thus acquire images of wafer 150. Image acquirer 120 may also perform various post-processing functions, such as generating contours, superimposing indicators on an acquired image, and the like. Image acquirer 120 may be configured to perform adjustments of brightness and contrast, etc. of acquired images. Storage 130 may be a storage medium such as a hard disk, random access memory (RAM), cloud storage, other types of computer readable memory, and the like. Storage 130 may be coupled with image acquirer 120 and may be used for saving scanned raw image data as original images, and post-processed images. Image acquirer 120 and storage 130 may be connected to controller 109. In some embodiments, image acquirer 120, storage 130, and controller 109 may be integrated together as one electronic control unit.

In some embodiments, image acquirer 120 may acquire one or more images of a sample based on an imaging signal received from detector 144. An imaging signal may correspond to a scanning operation for conducting charged particle imaging. An acquired image may be a single image comprising a plurality of imaging areas that may contain various features of wafer 150. The single image may be stored in storage 130. Imaging may be performed on the basis of imaging frames.

An image can be in the form of or represented by an analog signal (e.g., detector signals from an SEM). Alternatively, or additionally, an image can have a digital form, which can be stored as a digital file, reside in volatile memory, be transmitted as a digital signal, or the like. When describing image analysis, image manipulation, and other image processes, it is to be appreciated that such processes can be executed on any form or representation of the image. For example, cropping an image can correspond to truncating the corresponding pixels in a digital image file.

The condenser and illumination optics of the electron beam tool may comprise or be supplemented by electromagnetic quadrupole electron lenses. For example, as shown in Fig. 2B, electron beam tool 100B may comprise a first quadrupole lens 148 and a second quadrupole lens 158. In some embodiments, the quadrupole lenses are used for controlling the electron beam. For example, first quadrupole lens 148 can be controlled to adjust the beam current and second quadrupole lens 158 can be controlled to adjust the beam spot size and beam shape.

**Fig. 2B** illustrates a charged particle beam apparatus in which an inspection system may use a single primary beam that may be configured to generate secondary electrons by interacting with wafer 150. Detector 144 may be placed along optical axis 105, as in the embodiment shown in **Fig. 2B****.** The primary electron beam may be configured to travel along optical axis 105. Accordingly, detector 144 may include a hole at its center so that the primary electron beam may pass through to reach wafer 150.

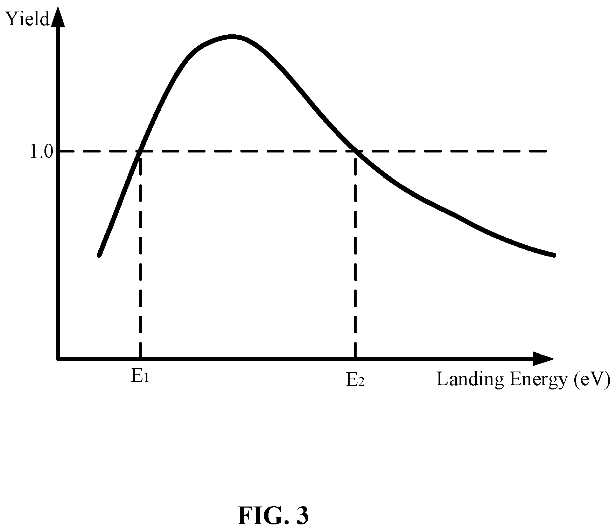

**Fig. 3** illustrates an exemplary graph showing a yield rate of total electrons (secondary electrons (SEs) and backscattered electrons) relative to landing energy of primary electron beamlets, consistent with embodiments of the present disclosure. The graph illustrates the relationship of the landing energy of a plurality of beamlets of a primary electron beam (e.g., plurality of beamlets 211, 212, or 213 of primary electron beam 202 of **Fig. 2A**) and the yield rate of secondary electron beams (e.g., secondary electron beams 261, 262, or 263 of **Fig. 2A**). The yield rate indicates the number of secondary electrons that are produced in response to the impact of the primary electrons. For example, a yield rate greater than 1.0 indicates that more secondary electrons may be produced than the number of primary electrons that have landed on the wafer. Similarly, a yield rate of less than 1.0 indicates that less secondary electrons may be produced in response to the impact of the primary electrons.

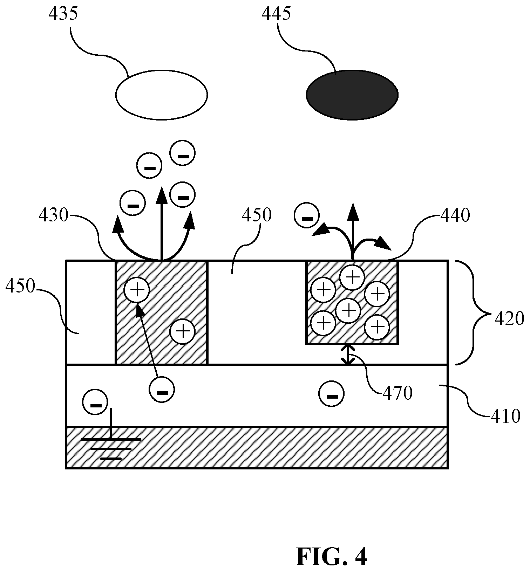

As shown in the graph of **Fig. 3****,** when the landing energy of the primary electrons is within a range from E₁ to E₂, more electrons may leave the surface of the wafer than land onto the surface of the wafer, which may result in a positive electrical potential at the surface of the wafer. In some embodiments, defect inspection may be performed in the foregoing range of landing energies, which is called "positive mode." An electron beam tool (e.g., electron beam tool 104 of **Fig. 2**) may generate a darker voltage contrast image of a device structure with a more positive surface potential since a detection device (e.g., detection device 240 of **Fig. 2**) may receive less secondary electrons (see **Fig. 4****).**

In addition to secondary electrons, backscattered electrons (BSE) are also emitted upon impact of the primary beam. Positive charging can occur with SE yields lower than 1 when the sum of the SE yield and BSE exceeds 1. When E₁ and E₂ refer to the energies where the SE yield (rather than the total yield) is 1, the range of positive mode is larger.

When the landing energy is lower than E₁ or higher than E₂, less electrons may leave the surface of the wafer, thereby resulting in a negative electrical potential at the surface of the wafer. In some embodiments, defect inspection may be performed in this range of the landing energies, which is called "negative mode." An electron beam tool (e.g., electron beam tool 104 of **Fig. 2**) may generate a brighter voltage contrast image of a device structure with a more negative surface potential a detection device (e.g., detection device 240 of **Fig. 2**) may receive more secondary electrons (see **Fig. 4**).

In some embodiments, the landing energy of the primary electron beams may be controlled by the total bias between the electron source and the wafer.

**Fig. 4** illustrates a schematic diagram of a voltage contrast response of a wafer, consistent with embodiments of the present disclosure. In some embodiments, physical and electrical defects in a wafer (e.g., resistive shorts and opens, defects in deep trench capacitors, back end of line (BEOL) defects, etc.) can be detected using a voltage contrast method of a charged particle inspection system. Defect detection using voltage contrast images may use a pre-scanning process (i.e., a charging, flooding, neutralization, or prepping process), where charged particles are applied to an area of the wafer (e.g., sample 208 of **Fig. 2**) to be inspected before conducting the inspection.

In some embodiments, an electron beam tool (e.g., electron beam tool 104 of **Fig. 2**) may be used to detect defects in internal or external structures of a wafer by illuminating the wafer with a plurality of beamlets of a primary electron beam (e.g., plurality of beamlets 211, 212, or 213 of primary electron beam 202 of **Fig. 2**) and measuring a voltage contrast response of the wafer to the illumination. In some embodiments, the wafer may comprise a test device region 420 that is developed on a substrate 410. In some embodiments, test device region 420 may include multiple device structures 430 and 440 separated by insulating material 450. For example, device structure 430 is connected to substrate 410. In contrast, device structure 440 is separated from substrate 410 by insulating material 450 such that a thin insulator structure 470 (e.g., thin oxide) exists between device structure 440 and substrate 410.

The electron beam tool may generate secondary electrons (e.g., secondary electron beams 261, 262, or 263 of **Fig. 2**) from the surface of test device region 420 by scanning the surface of test device region 420 with a plurality of beamlets of a primary electron beam. As explained above, when the landing energy of the primary electrons is between E₁ and E₂ (i.e., the yield rate is greater than 1.0 in **Fig. 3**), more electrons may leave the surface of the wafer than land on the surface, thereby resulting in a positive electrical potential at the surface of the wafer.

As shown in **Fig. 4****,** a positive electrical potential may build-up at the surface of a wafer. For example, after an electron beam tool scans test device region 420 (e.g., during a pre-scanning process), device structure 440 may retain more positive charges because device structure 440 is not connected to an electrical ground in substrate 410, thereby resulting in a positive electrical potential at the surface of device structure 440. In contrast, primary electrons with the same landing energy (i.e., the same yield rate) applied to device structure 430 may result in less positive charges retained in device structure 430 since positive charges may be neutralized by electrons supplied by the connection to substrate 410.

An image processing system (e.g., controller 109 of **Fig. 2**) of an electron beam tool may generate voltage contrast images 435 and 445 of corresponding device structures 430 and 440, respectively. For example, device structure 430 is shorted to the ground and may not retain built-up positive charges. Accordingly, when primary electron beamlets land on the surface of the wafer during inspection, device structure 430 may repel more secondary electrons thereby resulting in a brighter voltage contrast image. In contrast, because device structure 440 has no connection to substrate 410 or any other grounds, device structure 440 may retain a build-up of positive charges. This build-up of positive charges may cause device structure 440 to repel less secondary electrons during inspection, thereby resulting in a darker voltage contrast image.

An electron beam tool (e.g., multi-beam electron beam tool 104 of **Fig. 2**) may pre-scan the surface of a wafer by supplying electrons to build up the electrical potential on the surface of the wafer. After pre-scanning the wafer, the electron beam tool may obtain images of multiple dies within the wafer. In some embodiments, defects may be detected by comparing the differences in voltage contrast images from multiple dies. For example, if non-uniform charging is applied to the wafer and the voltage contrast level of one image associated with a first node is the same as the voltage contrast level of an image associated with a second node, the die corresponding to the two voltage contrast levels may have an electrical short circuit defect. Pre-scanning is applied to the wafer under the assumption that the electrical surface potential built-up on the surface of the wafer during pre-scanning will be retained during inspection and will remain above the detection threshold of the electron beam tool.

However, the built-up surface potential level may change during inspection due to the effects of electrical breakdown or tunneling, thereby resulting in failure to detect defects. For example, when a high voltage is applied to a high resistance thin device structure (e.g., thin oxide), such as an insulator structure 470, leakage current may flow through the high resistance structure, thereby preventing the structure from functioning as a perfect insulator. This may affect circuit functionality and result in a device defect. A similar effect of leakage current may also occur in a structure with improperly formed materials or a high resistance metal layer, for example a cobalt silicide (e.g., CoSi, CoSi₂, Co₂Si, Co₃Si, etc.) layer between a tungsten plug and a source or drain area of a field-effect transistor (FET).

A defective etching process may leave a thin oxide resulting in unwanted electrical blockage (e.g., open circuit) between two structures (e.g., device structure 440 and substrate 410) intended to be electrically connected. For example, device structures 430 and 440 may be designed to make contact with substrate 410 and function identically, but due to manufacturing errors, insulator structure 470 may exist in device structure 440. In this case, insulator structure 470 may represent a defect susceptible to a breakdown effect.

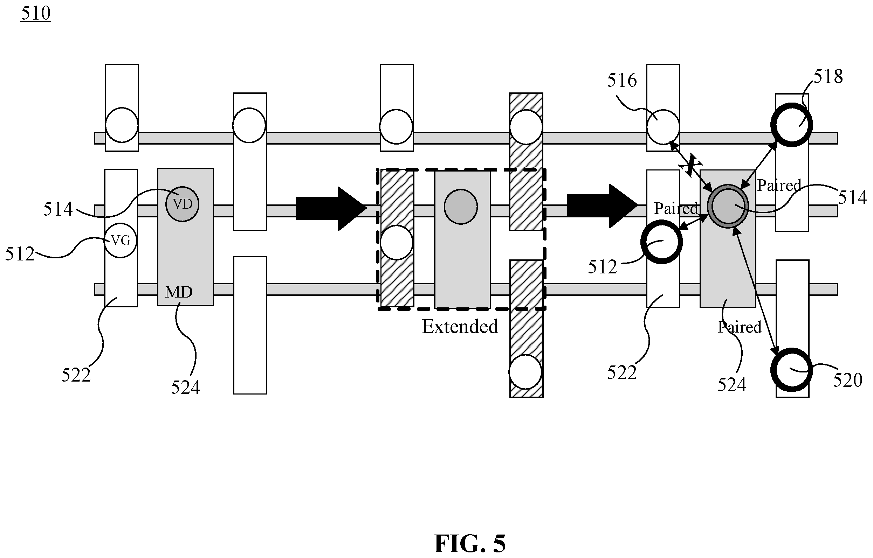

**Fig. 5** shows an example layout design 510 of a sample (e.g., sample 208 of **Fig. 2A****,** wafer 150 of **Fig. 2B**), consistent with embodiments of the present disclosure.

Layout design 510 may include features, such as a gate contact 512 on metal line 522 and a drain contact 514 on metal line 524.

A layout design may be stored in a layout file for a wafer design. The layout file can be in a Graphic Database System (GDS) format, Graphic Database System II (GDS II) format, an Open Artwork System Interchange Standard (OASIS) format, a Caltech Intermediate Format (CIF), etc. The wafer design may include patterns or structures for inclusion on the wafer. The patterns or structures can be mask patterns used to transfer features from the photolithography masks or reticles to a wafer. In some embodiments, a layout in GDS or OASIS format, among others, may comprise feature information stored in a binary file format representing planar geometric shapes, text, and other information related to the wafer design.

A GDS polygon, such as drain contact 514, may be selected as a feature of interest. A neighbor feature, such as gate contact 512, may be located based on an analysis of layout data (e.g., layout design data). In some embodiments, a feature of interest and a neighbor are neighbors within a threshold distance of each other. In some embodiments, neighbor features may be determined using a user-defined search range. In some embodiments, neighbor features may be determined using a search range extending from a center of the target feature (e.g., search range 530). In some embodiments, the size of the search range may be determined by the device's design node (e.g., pitch between metal gate and epitaxial contact). In some embodiments, connectivity between features on the sample may be determined based on an analysis of the layout data (e.g., connectivity between drain contact 514 and other features such as gate contact 512, contact 516, contact 518, or contact 520). In some embodiments, connectivity between features on the sample may be used to determine whether to perform proxy-based voltage contrast inspection on one or more pairs of features (e.g., to determine which pairs of features to perform proxy-based voltage contrast inspection and which pairs of features to not perform proxy-based voltage contrast inspection). For example, connectivity between contact 514 and each of contacts 512, 516, 518, and 520 may be determined. Based on the analysis of layout data, it may be determined that contacts 512, 518, and 520 are proxies to contact 514 while contact 516 is not a proxy to contact 514.

In some embodiments, process data may be used to determine whether or not to perform proxy-based voltage contrast inspection on one or more pairs of features (e.g., if a gate and a source/drain are printed at the same time, they cannot be printed to be shorted because the overlay will not cause a short.).

In some embodiments, the analysis of the layout data includes performing a logic versus schematic (LVS) analysis using a schematic of the sample and the layout data. For example, a LVS analysis may include comparing a schematic of a chip to layout design data of the chip. Based on the LVS analysis, the intended connection between each polygon in the layout design data and each node in the schematic can be determined (e.g., if two contacts are intended to be on the same metal line, the LVS analysis may show that proxy-based voltage contrast inspection should not be performed on these two contact because they are intended to be shorted; if two contacts are on separate metal lines, the LVS analysis may show that proxy-based voltage contrast inspection should be performed on these two contacts.).

In some embodiments, the analysis of the layout data may include performing logical operations on the layout data. For example, logical operations such as "gate AND diffusion AND contact" may be performed on the layout design data to determine connectivity between pairs of features that are not intended to be shorted (e.g., proxy-based voltage contrast inspection may be performed on these pairs of features). In another example, a logical operation such as "contact AND diffusion" may be performed on the layout design data to determine connectivity between pairs of features that are intended to be shorted (e.g., proxy-based voltage contrast inspection should not be performed on these pairs of features).

In some embodiments, the analysis of the layout data may show that proxy-based voltage contrast inspection should not be performed on a pair of features because the pair of features are intended to be shorted (e.g., a short being present is not a defect). For example, a gate and a source/drain may be intended to be shorted due to a horizontal jumper wire being present between the gate and the source/drain (e.g., in a static random-access memory (SRAM) region).

Analyses on layout data to determine connectivity between features are not limited to the analyses described above. For example, other analyses may determine which contact pairs can be shorted (e.g., at the device level, the source/drain of a transistor can be shorted to the gate of the same transistor and following this failure mode, a system can identify which gate or source/drain contacts are proxy pairs).

While the above example has drain contact 514 as a feature of interest and contacts 512, 518, and 520 as proxies, it is understood that any contact may be a feature of interest or a proxy.

An analysis on layout data to determine connectivity between features on a sample is conducted because due to the device-dependent nature of short-circuit paths, relying solely on the layout of a layer may result in an incorrect feature-to-feature (e.g., via-to-via) pairing. Such an incorrect pairing may result in inaccurate identification of which segment in the underlying layers causes the short circuit, resulting in nuisance detections (e.g., false defect detections) during inspection.

Analyses on layout data may use circuit layout information from the preceding layers and implement algorithmic logic to identify the correct feature-to-feature pairings. This approach reduces erroneous pairing identifications and determines potential short-circuit relationships in the underlying layers. As a result, the likelihood and origin of a defect of interest (DOI) may be determined.

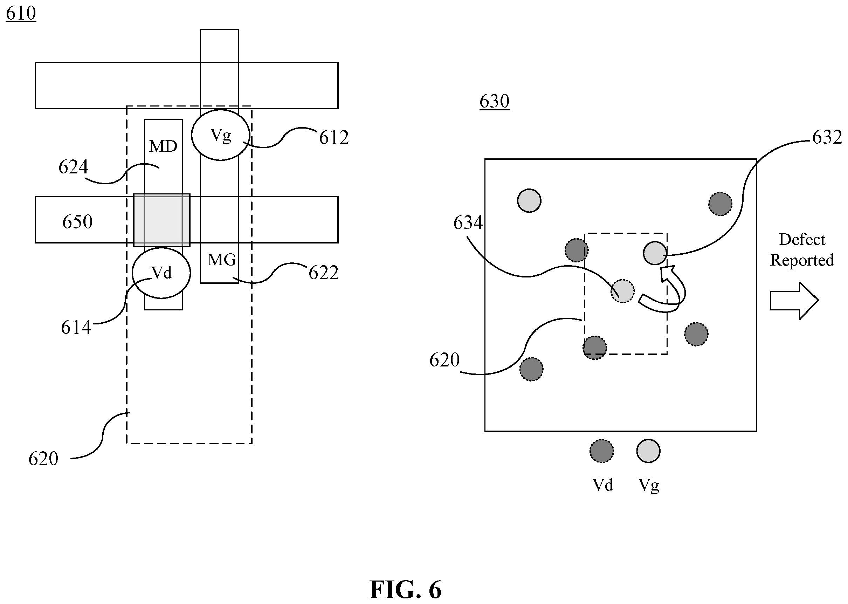

**Fig. 6** shows an example layout design 610 of a sample (e.g., sample 208 of **Fig. 2A****,** wafer 150 of **Fig. 2B**) and an example voltage contrast image 630 of the sample, consistent with embodiments of the present disclosure.

Layout design 610 may include polygons representing features, such as a gate contact 612 on metal line 622, a drain contact 614 on metal line 624, and a transistor channel 650 (e.g., silicon channel, nanosheet for a gate-all-around (GAA) device, fin for a fin field-effect transistor (FinFET)). In some embodiments, gate contact 612 may be a feature of interest. In some embodiments, other features (e.g., drain contact 614) may be features of interest. The connectivity between features (e.g., between gate contact 612 and drain contact 614) on the sample may be determined based on an analysis of layout data (as described above with respect to **Fig. 5**). The connectivity between features may be determined between features within a search range 620 including the feature of interest (e.g., gate contact 612). For example, the connectivity between the feature of interest and neighbor features (e.g., drain contact 614) within search range 620 may be determined. In some embodiments, neighbor features may be features within a threshold distance of the feature of interest.

Based on the connectivity, as described above with respect to **Fig. 5****,** whether to perform a proxy-based voltage contrast inspection on a pair of features may be determined. For example, gate contact 612 and drain contact 614 may have a connectivity such that a short between the contacts is a defect, meaning proxy-based voltage contrast inspection may be performed on the pair of contacts. Proxy-based voltage contrast inspection may be performed on gate contact 612 and drain contact 614 since they are different contact types.

In some embodiments, based on a determination that proxy-based voltage contrast inspection should be performed on a pair of features, the inspection may be performed by obtaining a voltage contrast image of the pair of features on the sample, comparing a grey level value (GLV) of the first feature to a GLV of the second feature using the voltage contrast image and determining, based on the comparison, whether there is a presence of a defect among the first feature or the second feature. For example, voltage contrast image 630 may be obtained and the GLV 632 of gate contact 612 may be compared to the GLV 634 of drain contact 614. In some embodiments, GLV may be calculated based on averaging, center position, maximum value, median, special filter, combination of different functions, or any other representative value based on a function of the signal from the contact from the voltage contrast image based on an average intensity of secondary electrons collected at the detectors. This comparison may be between GLV 632 of gate contact 612 and the GLVs of other neighbor features within search range 620.

In some embodiments, GLV 634 and GLV 632 may be within a tolerance range (e.g., GLV 634 and GLV 632 may be similar). In some embodiments, the tolerance range may be determined based on the layout of the sample. This comparison may indicate that a defect is present among gate contact 612 and drain contact 614. In some embodiments, the defect may be a short between gate contact 612 and drain contact 614. Advantageously, the difficulties of die-to-die inspection (e.g., reporting high levels of nuisance during inspection due to die-to-die variation) may be mitigated since inspection is performed on the same die between features of different types.

While the above embodiments describe drain and gate contacts, it is understood that the embodiments apply to any contact (e.g., source contacts).

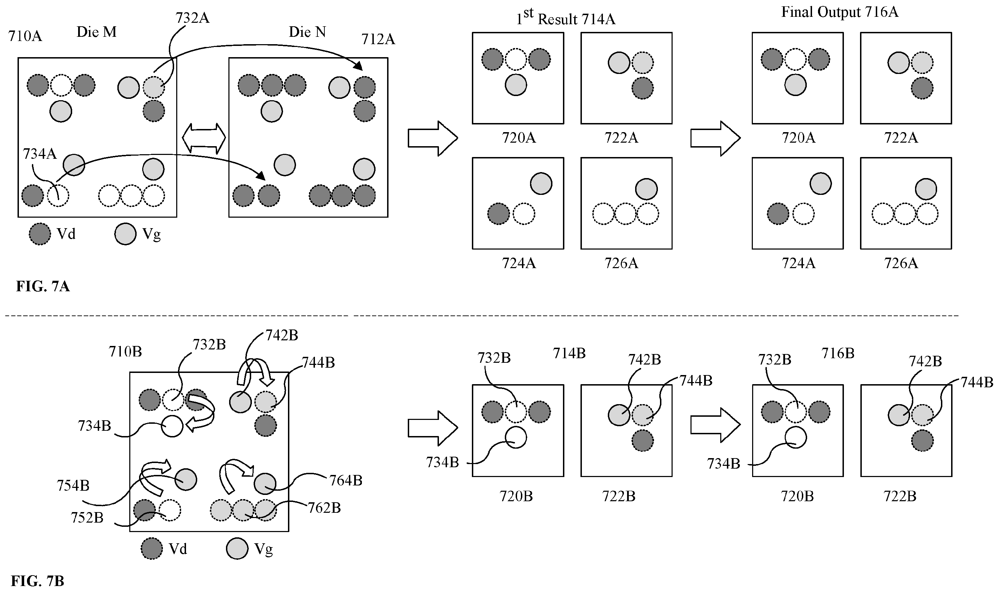

**Fig. 7A** shows example voltage contrast images 710A and 712A and inspection results 714A and 716A obtained from existing inspection methods. **Fig. 7B** shows an example voltage contrast image 710B and inspection results 714B and 716B, consistent with embodiments of the present disclosure.

Turning to **Fig. 7A****,** in existing inspection methods, such as die-to-die random mode, images across dies are compared. For example, voltage contrast image 710A of die M is compared to voltage contrast image 712A of die N. Defect output is determined by the difference in GLV across the dies (e.g., a larger difference in GLV corresponds to a higher likelihood of a defect being present). However, die-to-die differences often exist in the device, resulting in die-to-die variations in the GLV of the voltage contrast images. These die-to-die variations in the GLV across voltage contrast images result in higher levels of nuisance (e.g., false defect detections) being reported during inspection because differences in GLV due to defects may not be distinguishable from differences in GLV due to die-to-die variations. For example, based on the comparison of voltage contrast image 710A to voltage contrast image 712A, inspection result 714A reports that one or more features shown in images 720A, 722A, 724A, and 726A are defects (e.g., features 732A and 734A), even though they may not be a true defect. As a result, inspection result 716A reports defects in images 720A, 722A, 724A, and 726A, even though images 720A, 724A (e.g., feature 734A), and 726A contain a nuisance (e.g., the reported features in images 720A, 724A, and 726A are false defects) and image 722A includes a true defect (e.g., feature 732A).

Turning to **Fig. 7B****,** in proxy-based voltage contrast inspection (consistent with **Figs. 5** and **6**), GLVs of features are compared in a single die image, whether the features are arranged in a periodic pattern or a non-periodic pattern. For example, GLVs of features in a pair (indicated by the arrows) are compared to each other in voltage contrast image 710B (e.g., pairs 732B and 734B, 742B and 744B, 752B and 754B, and 762B and 764B). In each pair of features, one feature may be a feature of interest while the other feature may be a proxy. Inspection result 714B reports one or more features shown in images 720B and 722B. One or more pairs of features in images 720B (e.g., features 732B and 734B) and 722B (e.g., features 742B and 744B) have GLVs that are within a tolerance range of each other (e.g., the difference GLV between features in a pair meet a criterion for being considered a potential defect). As a result, inspection result 716B reports features in images 720B (e.g., features 732B and 734B) and 722B (e.g., features 742B and 744B) with a higher likelihood of including a defect, while filtering out redundant false signals (e.g., nuisance).

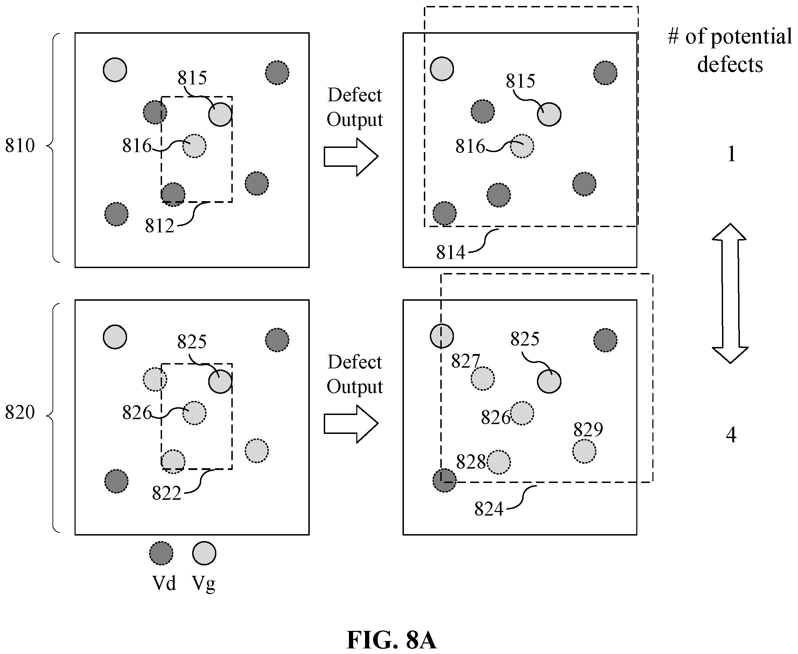

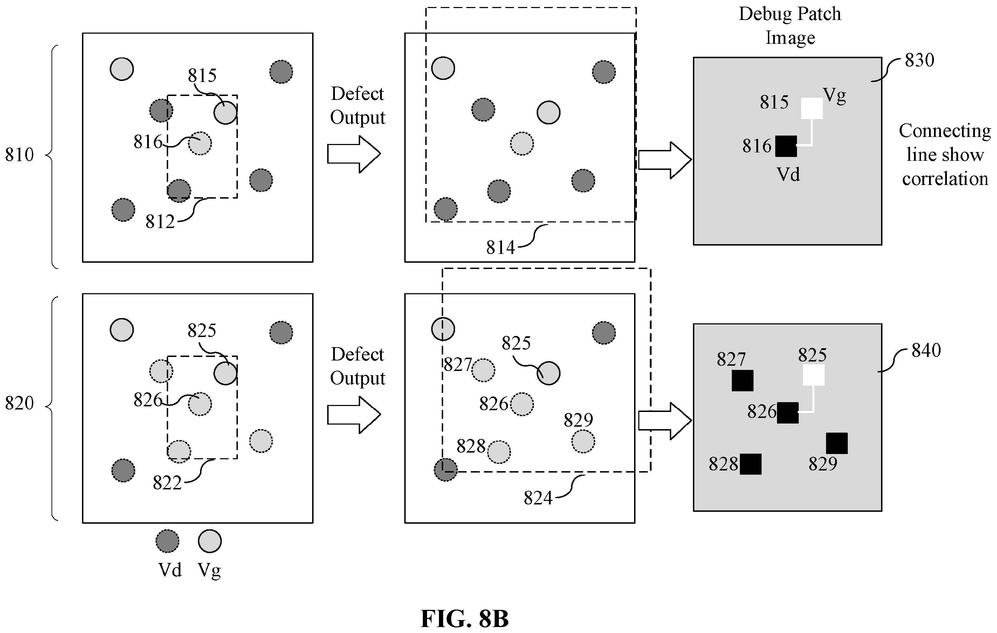

**Figs. 8A** and **8B** show example voltage contrast images 810 and 820 illustrating single and cluster proxy-based voltage contrast inspection, consistent with embodiments of the present disclosure.

Embodiments described in the present disclosure (see, e.g., **Figs. 5****,** **6****,** **7B**, **9-13**) may apply to various pairs of features. For example, search range 812 in voltage contrast image 810 may include a feature of interest 815 and a proxy feature with a defect present (e.g., contacts 815 and 816 are shorted) and search range 822 in voltage contrast image 820 may include a feature of interest 825 and a proxy feature 826 with a defect present (e.g., contacts 825 and 826 are shorted). The search range may be expanded to search range 814 in image 810 and to search range 824 in image 820. Using the methods described in the present disclosure, one or more additional neighbor features in the respective search ranges may be identified to perform cluster proxy-based inspection (e.g., cluster proxy-based inspection may be performed in a manner similar to single proxy-based inspection, but with an additional layer of logic to determine whether a defect is present in the additional pairs of features). A comparison of the GLV of the feature of interest to the GLV of each of the neighbor features may show that image 810 still has one defect present, but that image 820 has four defects present. That is, proxy-based voltage contrast inspection may show that one pair of shorted contacts is present in search range 814 (contact 815 and contact 816 are shorted) and four pairs of shorted contacts are present in search range 824 (contacts 825 and 826 are shorted, contacts 825 and 827 are shorted, contacts 825 and 828 are shorted, and contacts 825 and 829 are shorted).

**Fig. 8B** further shows debug patch image 830 corresponding to the features in image 810 and debug patch image 840 corresponding to the features in image 820. Debug images 830 and 840 show the neighbor features associated with the feature of interest in image 810 and 820, respectively. For example, debug image 830 shows that feature 815 can be shorted to feature 816 and debug image 840 shows that feature 825 can be shorted to features 826, 827, 828, or 829 (e.g., debug images 830 and 840 show possible pairs of features for proxy-based voltage contrast inspection). In some embodiments, proxy-based voltage contrast inspection may be performed by iterating through each possible pair of features. For example, if a defect is not reported for a first pair of features, the inspection may proceed with the next pair of features with a possible defect.

In some embodiments, the presence of a cluster of defects may indicate a different failure mode from a single defect or it may indicate nuisance. For example, in some cases, a cluster of defects may indicate the presence of nuisance while a single defect may be a real defect. In some embodiments, reporting a single defect separately from a cluster of defects is important to further filter out nuisance.

In some embodiments, proxy-based voltage contrast inspection may have greater primary beam tolerance. For example, in traditional die-to-die inspection algorithms, the delta GLV difference has a direct physical relationship with the primary beam current and primary beam spot size. For example, any change in the primary beam properties is highly likely to directly affect the delta GLV, causing a change in sensitivity. Embodiments of the present disclosure (see, e.g., **Figs. 5****,** **6****,** **7B**, **9-13**) include a detection algorithm that allows specifying a delta GLV range between specific patterns, (e.g., delta GLV = 0), which may advantageously increase the tolerance of primary beam current and beam spot resolution.

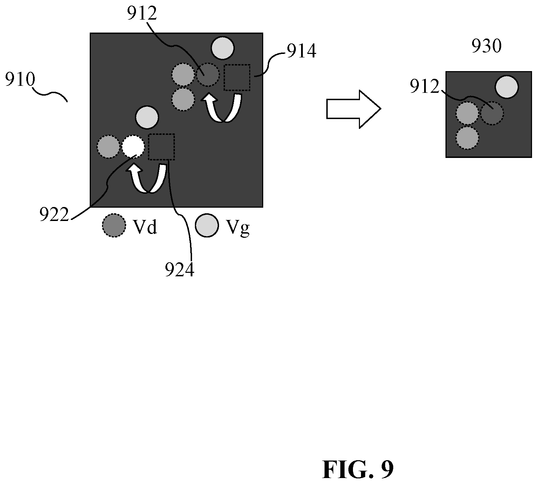

**Fig. 9** shows an example voltage contrast image 910, consistent with embodiments of the present disclosure.

Embodiments of the present disclosure (e.g., **Figs. 5****,** **6****,** **7B****,** **8A****,** **8B**, **10-13**) may use an insulating layer (e.g., an oxide) as a proxy feature to perform proxy-based voltage contrast inspection. For example, image 910 may show feature of interest 912 and feature of interest 922. Features 912 and 922 may be contacts (e.g., source or drain). Oxide 914 may be a neighbor feature to feature 912 and oxide 924 may be a neighbor feature to feature 922. 12. For example, determining that proxy-based voltage contrast inspection should be performed on the feature 912 and oxide 914 or on feature 922 and oxide 924 may include determining that a defect is present if the feature of interest and the oxide are electrically open.

A comparison between the GLV of feature 912 and the GLV of oxide 914 may show that the GLV of oxide 914 is within a tolerance range of the GLV of feature 912, indicating that a defect may be present (e.g., an electrical open between feature 912 and oxide 914). A comparison between the GLV of feature 922 and the GLV of oxide 924 may show that the GLV of oxide 924 is outside of a tolerance range of the GLV of feature 922, indicating that a defect may not be present (e.g., there is no electrical open between feature 922 and oxide 924). Inspection result 930 shows that feature 912 may be reported as having a defect (e.g., an electrical open) since the GLV of feature 912 is close to the GLV of oxide 914.

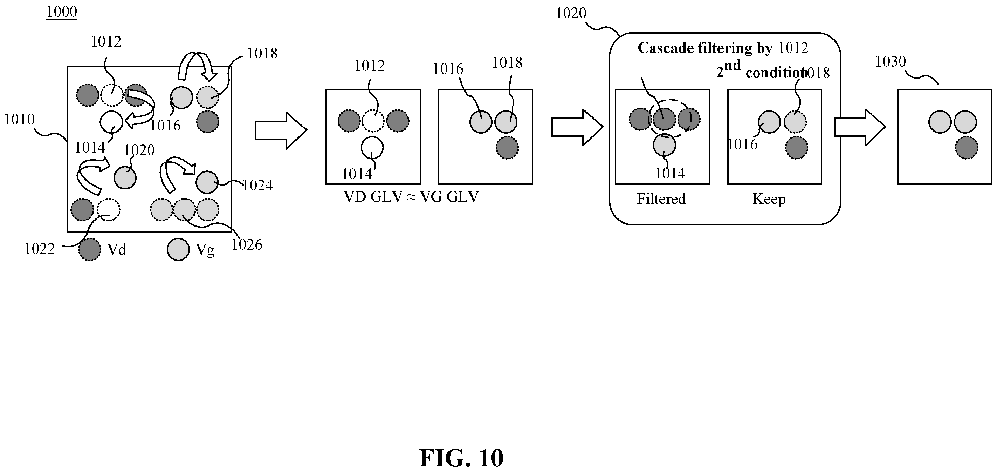

**Fig. 10** shows an example process 1000 of cascade proxy-based voltage contrast inspection, consistent with embodiments of the present disclosure.

In some embodiments, two features (e.g., contacts) may randomly have similar GLVs without having a defect present. This scenario may occur in large inspection areas, such as with multi-beam inspection. As a result, in some embodiments, there may still be thousands of nuisance data (e.g., false defects) reported, even after performing proxy-based voltage contrast inspection. Cascade proxy-based voltage contrast inspection may further mitigate the reporting of nuisance data.

If two features can potentially be shorted, then they should have similar GLVs (e.g., GLVs within a tolerance range), even at different conditions (e.g., inspection parameters, any SEM parameter, advanced charge controller (ACC) parameters, other equipment settings during inspection, etc.). Cascade proxy-based voltage contrast inspection may be performed by performing proxy-based voltage contrast inspection consistent with embodiments of the present disclosure (e.g., **Figs. 5****,** **6****,** **7B****,** **8A****,** **8B****,** **9**, **11-13**), at different conditions. For example, if a defect is reported after performing proxy-based voltage contrast inspection at a first condition, proxy-based voltage contrast inspection may be performed at a second condition on the pairs of features where a defect was reported at the first condition. In some embodiments, the second condition may be significantly different from the first condition to filter out as many nuisances as possible. One reason cascade inspection is important is because it narrows down defect candidates.

In some embodiments, the inspection parameter may be a parameter of an advanced charge controller (ACC) laser (e.g., the first condition may be with the ACC on and the second condition may be with ACC off, or vice versa). In some embodiments, the inspection parameter may be ACC laser wavelength directed to the sample, ACC laser power directed to the sample, pixel size, landing energy, current, resolution, extraction field, dot/line/frame averages, etc.

In some embodiments, the second condition may be on a different tool to create such difference from the first condition or to save tool cost as the second inspection is usually faster due to lower coverage needed (e.g., multi-beam inspection may be used for the first condition while single beam inspection may be used for the second condition). In some embodiments, when multi-beam inspection is able to improve scanning efficiency by scanning selective areas (also known as flexi scan or pixel scan), the second scan can be performed more efficiently in a multi-beam inspection tool by only scanning the defect candidates that have been found in the first inspection.

It is understood that cascade proxy-based voltage contrast inspection is not limited to two conditions and that inspection may be performed at any number of conditions.

Process 1000 shows voltage contrast image 1010, obtained during proxy-based voltage contrast inspection at a first condition. Image 1010 shows feature pairs 1012 and 1014, 1016 and 1018, 1020 and 1022, and 1024 and 1026. Image 1010 shows features 1012 and 1014 have GLVs within a tolerance range and features 1016 and 1018 have GLVs within a tolerance range.

Based on features 1012 and 1014 having GLVs within a tolerance range and features 1016 and 1018 having GLVs within a tolerance range, a second proxy-based voltage contrast inspection at a second condition may be performed on features 1012 and 1014 and 1016 and 1018. As shown in element 1020, voltage contrast images of features 1012 and 1014 and 1016 and 1018 obtained during the second proxy-based voltage contrast inspection show the GLVs of features 1012 and 1014 are outside of a tolerance range and the GLVs of features 1016 and 1018 are still within a tolerance range. As a result, the reporting of features 1012 and 1014 is filtered out and the reporting of features 1016 and 1018, where final inspection report 1030 includes features 1016 and 1018 being reported as a potential defect (e.g., a short between features 1016 and 1018).

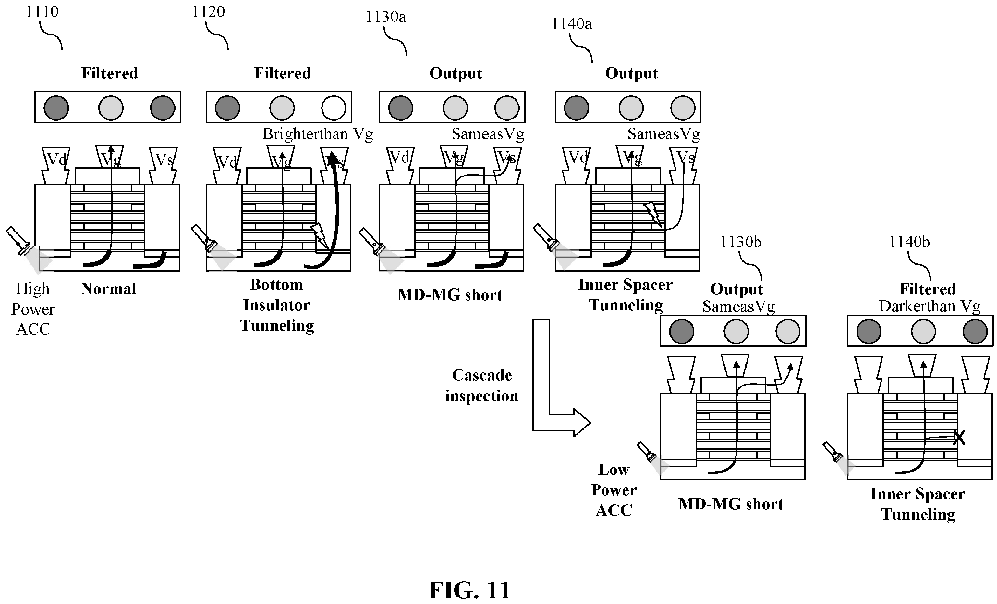

Fig. 11 shows cross-sectional diagrams of samples with features and their corresponding GLVs from voltage contrast images during cascade proxy-based voltage contrast inspection, consistent with embodiments of the present disclosure.

Diagrams 1110, 1120, 1130a, and 1140a show diagrams of cross-sections of features and their corresponding GLVs at a first inspection condition. Each of diagrams 1110, 1120, 1130a, and 1140a show a gate contact Vg, a source contact Vs, a drain contact Vd, and arrows depicting current flow. Diagram 1110 shows features (e.g., Vg, Vs, Vd) that are normal (e.g., no defects, such as shorting between contacts, present) at a first inspection condition (e.g., high power ACC). Since the GLVs of the features exhibit normal behavior, these features are filtered out during cascade proxy-based voltage contrast inspection (e.g., a second inspection at a second condition is not performed on these features).

Diagram 1120 shows bottom insulator tunneling to Vs. Bottom insulator tunneling can occur from uncontrolled leakage current in the substrate and does not typically occur to Vs. In some cases, the GLV of the Vs (or Vd) may be brighter or darker than the GLV of Vg. Bottom insulator tunneling is not considered a defect. Therefore, these features can be filtered out during cascade proxy-based voltage contrast inspection.

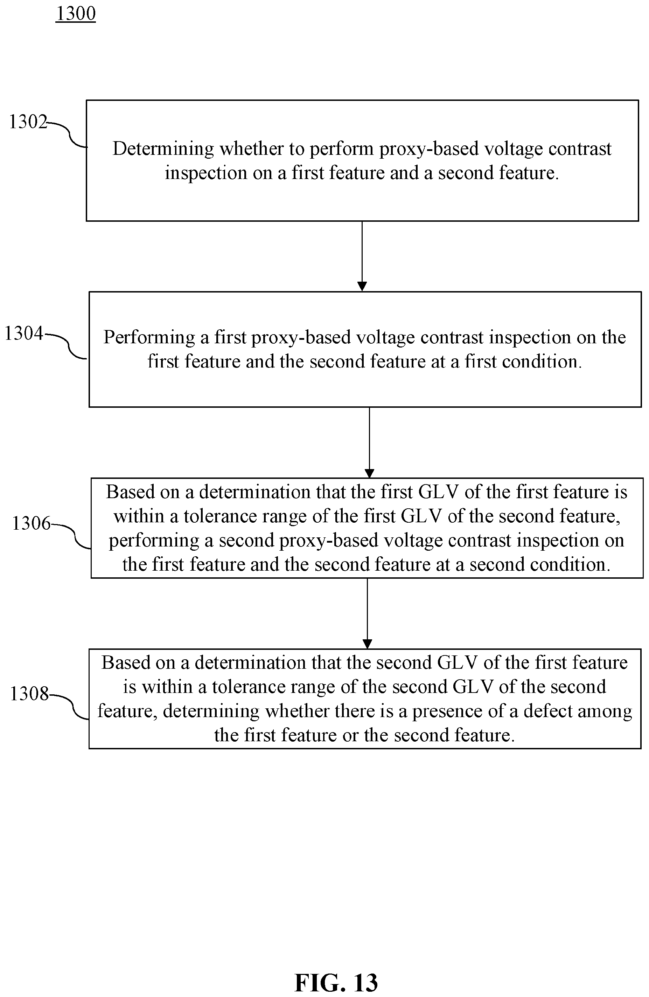

Diagrams 1130a and 1140a show the GLV of Vg being the same as the GLV of Vs. Proxy-based voltage contrast inspection at a second inspection condition (e.g., lower power ACC) may be performed on the features depicted in diagrams 1130a and 1140a, as described in embodiments of the present disclosure (e.g., **Figs. 10****,** **13**). Diagrams 1130b and 1140b show diagrams of cross-sections of features and their corresponding GLVs at the second inspection condition. Each of diagrams 1130b and 1140b show a gate contact Vg, a source contact Vs, a drain contact Vd, and arrows depicting current flow. Diagram 1130b shows that the GLV of Vg is still in the same range as the GLV of Vs, consistent with shorting between Vg and Vs. Diagram 1140b shows that the GLV of Vs is darker than the GLV of Vg, consistent with inner spacer tunneling occurring during the first inspection (as shown by the arrows in diagram 1140a). As a result, the features in diagram 1130b are reported as having a defect present while the features in diagram 1140b are filtered out.

In some embodiments, proxy-based voltage contrast inspection may be used for condition optimization. For example, Vd may be the proxy of a Vg-Vd short on Vg. Therefore, when there is no feature of interest or defect of interest at the beginning of a recipe setup to tune condition, the GLV difference of Vd and Vg may be used as a key performance indicator for a defect signal. In other words, Vd may represent a Vg bright voltage contrast defect signal and Vg may represent a normal Vg signal. The difference between the GLVs of Vd and Vg becomes the bright voltage contrast. A condition that maximizes the Vd-Vg GLV contrast and minimizes the Vg's own GLV spread may be determined. In some embodiments, Vg may be the proxy of a Vg-Vd short on Vd. The GLV of the difference between the GLVs of Vs/Vd and Vg S may be maximized to maximize sensitivity. As a result, defects of interest are not needed to maximize the GLV difference and the inspection parameters may be tuned.

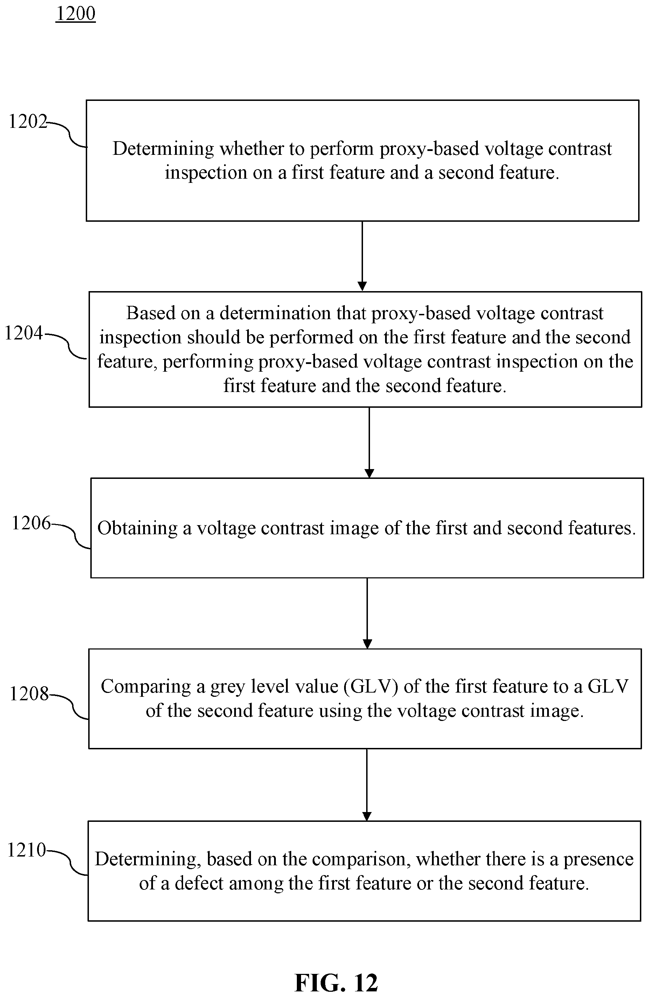

**Fig. 12** shows an example process for proxy-based voltage contrast inspection, consistent with embodiments of the present disclosure. It is understood that although VC inspection is illustrated, other types of inspection, including physical/optical inspection may be utilized without departing from the scope of the disclosure.

At step 1202, a system (e.g., e.g., controller 109 of **Fig. 1****,** controller 109 of **Fig. 2A****,** controller 109 of **Fig. 2B****,** image processing system 199 of **Fig. 2B**) may determine whether to perform proxy-based voltage contrast inspection on a first feature and a second feature, consistent with embodiments of the present disclosure (e.g., **Figs. 5-6**). Step 1202 may be based on connectivity between features on a sample. Determining connectivity between features on a sample may be based on an analysis of layout data, consistent with embodiments of the present disclosure (e.g., **Figs. 5-6**).

At step 1204, based on a determination that proxy-based voltage contrast inspection should be performed on the first feature and the second feature, performing proxy-based voltage contrast inspection on the first feature and the second feature, consistent with embodiments of the present disclosure (e.g., **Figs. 6****,** **7B****,** **8A****,** **8B****,** **9**).

At steps 1206, 1208, and 1210, the system may perform proxy-based voltage contrast inspection on the first feature and the second feature by obtaining a voltage contrast image of the first and second features, comparing a grey level value (GLV) of the first feature to a GLV of the second feature using the voltage contrast image, and determining, based on the comparison, a whether there is a presence of a defect among the first feature or the second feature (see, e.g., **Figs. 6****,** **7B****,** **8A****,** **8B****,** **9**).

**Fig. 13** shows an example process for proxy-based voltage contrast inspection, consistent with embodiments of the present disclosure.

At step 1302, a system (e.g., e.g., controller 109 of **Fig. 1****,** controller 109 of **Fig. 2A****,** controller 109 of **Fig. 2B****,** image processing system 199 of **Fig. 2B**) may determine whether to perform proxy-based voltage contrast inspection on a first feature and a second feature, consistent with embodiments of the present disclosure (e.g., **Figs. 5-6**). Step 1302 may be based on connectivity between features on a sample. Determining connectivity between features on a sample may be based on an analysis of layout data, consistent with embodiments of the present disclosure (e.g., **Figs. 5-6**).

At step 1304, based on a determination that proxy-based voltage contrast inspection should be performed on the first feature and the second feature, the system may perform a first proxy-based voltage contrast inspection on the first feature and the second feature at a first condition (e.g., **Figs. 6****,** **7B****,** **8A****,** **8B****,** **9****,** **10****,** **11**). The system may perform first proxy-based voltage contrast inspection on the first feature and the second feature at a first condition by obtaining a first voltage contrast image of the first and second features and comparing a first GLV of the first feature to a first GLV of the second feature using the first voltage contrast image.

At step 1306, based on a determination that the first GLV of the first feature is within a first tolerance range of the first GLV of the second feature, the system may perform a second proxy-based voltage contrast inspection on the first feature and the second feature at a second condition (e.g., **Figs. 6****,** **7B****,** **8A****,** **8B****,** **9****,** **10****,** **11**). The system may perform the second proxy-based voltage contrast inspection on the first feature and the second feature at a second condition by obtaining a second voltage contrast image of the first and second features and comparing a second GLV of the first feature to a second GLV of the second feature using the second voltage contrast image.

At step 1308, based on a determination that the second GLV of the first feature is within a second tolerance range of the second GLV of the second feature, the system may determine whether there is a presence of a defect among the first feature or the second feature (e.g., **Figs. 6****,** **7B****,** **8A****,** **8B****,** **9****,** **10****,** **11**).

Based on a determination that the second GLV of the first feature is outside of the second tolerance range of the second GLV of the second feature, the system may determine the absence of the defect among the first feature or the second feature (e.g., **Figs. 6****,** **7B****,** **8A****,** **8B****,** **9****,** **10****,** **11**).

In some embodiments, the first tolerance range and the second tolerance range may be set independently, meaning that the first tolerance range may be different from the second tolerance range. The tolerance range may be selected based on the noise level of the corresponding inspection. For example, if a first inspection is noisier than a second inspection, then a higher tolerance range may be used for the first inspection than for the second inspection.

It is understood that although voltage contrast inspection is illustrated for embodiments of the present disclosure, other types of inspection, including physical/optical inspection may be utilized without departing from the scope of the disclosure.

A non-transitory computer readable medium may be provided that stores instructions for a processor of a controller (e.g., controller 109 of **Fig. 1****,** controller 109 of **Fig. 2A****,** controller 109 of **Fig. 2B****,** image processing system 199 of **Fig. 2B**) for controlling the electron beam tool or other systems of other systems and servers, or components thereof, consistent with embodiments in the present disclosure. These instructions may allow the one or more processors to carry out image processing, data processing, beamlet scanning, graphical display, operations of a charged particle beam apparatus, or another imaging device, or the like for providing operations consistent with those described above for **Figs. 5****,** **6****,** **7B**, **8-13**. In some embodiments, the non-transitory computer readable medium may be provided that stores instructions for a processor to perform the steps of processes 1200 or 1300. Common forms of non-transitory media include, for example, a floppy disk, a flexible disk, hard disk, solid state drive, magnetic tape, or any other magnetic data storage medium, a Compact Disc Read Only Memory (CD-ROM), any other optical data storage medium, any physical medium with patterns of holes, a Random Access Memory (RAM), a Programmable Read Only Memory (PROM), and Erasable Programmable Read Only Memory (EPROM), a FLASH-EPROM or any other flash memory, Non-Volatile Random Access Memory (NVRAM), a cache, a register, any other memory chip or cartridge, and networked versions of the same.

The embodiments may further be described using the following clauses:
1. A non-transitory computer readable medium that stores a set of instructions that is executable by at least one processor of a computing device to cause the computing device to perform operations for inspection, the operations comprising:
   based on an analysis of layout data, determining connectivity between features on a sample;
   based on the determined connectivity, determining whether to perform inspection on a first feature and a second feature;
   based on a determination that inspection should be performed on the first feature and the second feature, performing inspection on the first feature and the second feature by:
      obtaining a voltage contrast image of the first and second features;
      comparing a grey level value (GLV) of the first feature to a GLV of the second feature using the voltage contrast image; and
      determining, based on the comparison, whether there is a presence of a defect among the first feature or the second feature.
2. The non-transitory computer readable medium of clause 1, wherein the analysis of the layout data comprises performing a logic versus schematic analysis using a schematic of the sample and the layout data.
3. The non-transitory computer readable medium of clause 1, wherein the analysis of the layout data comprises performing logical operations on the layout data.
4. The non-transitory computer readable medium of any one of clauses 1-3, wherein the first feature and the second feature are neighbors within a threshold distance of each other.
5. The non-transitory computer readable medium of any one of clauses 1-4, wherein the defect is a short between the first feature and the second feature.
6. The non-transitory computer readable medium of any one of clauses 1-5, wherein determining that inspection should be performed on the first feature and the second feature comprises determining that a defect is present if the first feature and the second feature are shorted.
7. The non-transitory computer readable medium of any one of clauses 1-6, wherein the GLV of the first feature is within a tolerance range of the GLV of the second feature.
8. The non-transitory computer readable medium of any one of clauses 1-7, wherein determining that inspection should not be performed on the first feature and the second feature comprises determining that the first feature being shorted to the second feature is not a defect.
9. The non-transitory computer readable medium of any one of clauses 1-8, wherein one of the first feature or the second feature is a gate and the other of the first feature or the second feature is a source or drain.
10. The non-transitory computer readable medium of any one of clauses 1-4, wherein the defect is an electrical open between the first feature and the second feature.
11. The non-transitory computer readable medium of any one of clauses 1-4 or 10, wherein determining that inspection should be performed on the first feature and the second feature comprises determining that a defect is present if the first feature and the second feature are electrically open.
12. The non-transitory computer readable medium of any one of clauses 1-4 or 10-11, wherein the GLV of the first feature is within a tolerance range of the GLV of the second feature.
13. The non-transitory computer readable medium of any one of clauses 1-4 or 10-12, wherein one of the first feature or the second feature is an insulating material and the other of the first feature or the second feature is a source or drain.
14. The non-transitory computer readable medium of any one of clauses 1-13, wherein the operations further comprise:
   based on the determined connectivity, determining whether to perform inspection on a third feature and the first feature;
   based on a determination that inspection should be performed on the third feature and the first feature, performing inspection on the third feature and the first feature by:
      comparing a GLV of the third feature to a GLV of the second feature using the voltage contrast image; and
      determining, based on the comparison, whether there is a presence of a defect among the first feature or the third feature.
15. The non-transitory computer readable medium of clause 14, wherein the first feature and the third feature are neighbors within a threshold distance of each other.
16. The non-transitory computer readable medium of any one of clauses 14-15, wherein the defect is a short between the first feature and the third feature.
17. The non-transitory computer readable medium of any one of clauses 14-16, wherein determining that inspection should be performed on the first feature and the third feature comprises determining that a defect is present if the first feature and the third feature are shorted.
18. The non-transitory computer readable medium of any one of clauses 14-17, wherein the GLV of the first feature is within a tolerance range of the GLV of the third feature.
19. The non-transitory computer readable medium of any one of clauses 14-18, wherein determining that inspection should not be performed on the first feature and the third feature comprises determining that the first feature being shorted to the third feature is not a defect.
20. The non-transitory computer readable medium of any one of clauses 14-19, wherein one of the first feature or the third feature is a gate and the other of the first feature or the third feature is a source or drain.
21. The non-transitory computer readable medium of any one of clauses 14-15, wherein the defect is an electrical open between the first feature and the third feature.
22. The non-transitory computer readable medium of any one of clauses 14-15 or 21, wherein determining that inspection should be performed on the first feature and the third feature comprises determining that a defect is present if the first feature and the third feature are electrically open.
23. The non-transitory computer readable medium of any one of clauses 14-15 or 21-22, wherein the GLV of the first feature is within a tolerance range of the GLV of the third feature.
24. The non-transitory computer readable medium of any one of clauses 14-15 or 21-23, wherein one of the first feature or the third feature is an insulating material and the other of the first feature or the third feature is a source or drain.
25. The non-transitory computer readable medium of any one of clauses 1-24, wherein the inspection comprises voltage contrast inspection or physical inspection.
26. A non-transitory computer readable medium that stores a set of instructions that is executable by at least one processor of a computing device to cause the computing device to perform a operations for inspection, the operations comprising:
   based on an analysis of layout data, determining connectivity between features on a sample;
   based on the determined connectivity, determining whether to perform proxy-based voltage contrast inspection on a first feature and a second feature;
   based on a determination that inspection should be performed on the first feature and the second feature, performing a first inspection on the first feature and the second feature at a first condition by:
      obtaining a first voltage contrast image of the first and second features; and
      comparing a first grey level value (GLV) of the first feature to a first GLV of the second feature using the first voltage contrast image;
   based on a determination that the first GLV of the first feature is within a first tolerance range of the first GLV of the second feature, performing a second inspection on the first feature and the second feature at a second condition by:
      obtaining a second voltage contrast image of the first and second features; and
      comparing a second GLV of the first feature to a second GLV of the second feature using the second voltage contrast image; and
   based on a determination that the second GLV of the first feature is within a second tolerance range of the second GLV of the second feature, determining whether there is a presence of a defect among the first feature or the second feature.
27. The non-transitory computer readable medium of clause 26, wherein the first condition is a first setting of an inspection parameter and the second condition is a second setting of the inspection parameter.
28. The non-transitory computer readable medium of clause 26, wherein the inspection parameter is any one of laser wavelength directed to the sample, laser power directed to the sample, pixel size, landing energy, current, resolution, or extraction field.
29. The non-transitory computer readable medium of any one of clauses 26-28, wherein any one or more of the first inspection or the second inspection comprises voltage contrast inspection or physical inspection.
30. A non-transitory computer readable medium that stores a set of instructions that is executable by at least one processor of a computing device to cause the computing device to perform operations for inspection, the operations comprising:
   analyzing layout data related to a sample to determine connectivity between features on the sample;
   determining that inspection should be performed on a first feature and a second feature based on the determined connectivity, the inspection comprising:
      comparing a grey level value (GLV) of the first feature to a GLV of the second feature using a voltage contrast image of the first and second features; and
      determining, based on the comparison, whether a defect associated with the first feature and the second feature is present.
31. A non-transitory computer readable medium that stores a set of instructions that is executable by at least one processor of a computing device to cause the computing device to perform operations for inspection, the operations comprising:
   analyzing layout data related to a sample to determine connectivity between features on the sample;
   determining that inspection should be performed on a first feature and a second feature based on the determined connectivity, the inspection comprising:
      comparing a first GLV of the first feature to a first GLV of the second feature using a first voltage contrast image of the first and second features obtained at a first condition;
      based on the comparison, obtaining a second voltage contrast image of the sample at a second condition;
      comparing a second GLV of the first feature to a second GLV of the second feature; and
      determining, based on the comparison of the second GLV of the first feature to the second GLV of the second feature, whether a defect associated with the first feature and the second feature is present.
32. A non-transitory computer readable medium that stores a set of instructions that is executable by at least one processor of a computing device to cause the computing device to perform operations for inspection, the operations comprising:
   determining a relationship between points of interest (POIs), wherein the POIs are based on layout data that represents a sample;
   determining grey level values (GLVs) of the POIs; and
   determining, based on the GLVs and the relationship, a presence of a defect.
33. The non-transitory computer readable medium of clause 32, wherein determining the GLVs comprises:
   comparing the GLVs of any one or more of a source/drain or gate to surrounding vias; or
   comparing the GLVs of any one or more of the source/drain or the gate to surrounding oxide.
34. The non-transitory computer readable medium of any one of clauses 32-33, wherein determining the relationship comprises performing a logic versus schematic analysis using a schematic of the sample and the layout data.
35. The non-transitory computer readable medium of any one of clauses 32-34, wherein determining the relationship comprises performing logical operations on the layout data.
36. The non-transitory computer readable medium of any one of clauses 32-35, wherein the POIs are neighbors within a threshold distance of each other.
37. The non-transitory computer readable medium of any one of clauses 32-36, wherein the defect is a short between one or more of the POIs.
38. The non-transitory computer readable medium of any one of clauses 32-36, wherein the defect is an open between one or more of the POIs.
39. The non-transitory computer readable medium of any one of clauses 32-38, wherein:
   the defect is present among a first POI and a second POI; and
   the GLV of the first POI is within a tolerance range of the GLV of the second POI.
40. A system for inspection, the system comprising:
   a memory storing a set of instructions; and
   one or more processors configured to execute the set of instructions to cause the system to perform operations comprising:
      based on an analysis of layout data, determining connectivity between features on a sample;
      based on the determined connectivity, determining whether to perform inspection on a first feature and a second feature;
      based on a determination that inspection should be performed on the first feature and the second feature, performing inspection on the first feature and the second feature by:
         obtaining a voltage contrast image of the first and second features;
         comparing a grey level value (GLV) of the first feature to a GLV of the second feature using the voltage contrast image; and
         determining, based on the comparison, whether there is a presence of a defect among the first feature or the second feature.
41. The system of clause 40, wherein the analysis of the layout data comprises performing a logic versus schematic analysis using a schematic of the sample and the layout data.
42. The system of clause 40, wherein the analysis of the layout data comprises performing logical operations on the layout data.
43. The system of any one of clauses 40-42, wherein the first feature and the second feature are neighbors within a threshold distance of each other.
44. The system of any one of clauses 40-43, wherein the defect is a short between the first feature and the second feature.
45. The system of any one of clauses 40-44, wherein determining that inspection should be performed on the first feature and the second feature comprises determining that a defect is present if the first feature and the second feature are shorted.
46. The system of any one of clauses 40-45, wherein the GLV of the first feature is within a tolerance range of the GLV of the second feature.
47. The system of any one of clauses 40-46, wherein determining that inspection should not be performed on the first feature and the second feature comprises determining that the first feature being shorted to the second feature is not a defect.
48. The system of any one of clauses 40-47, wherein one of the first feature or the second feature is a gate and the other of the first feature or the second feature is a source or drain.
49. The system of any one of clauses 40-43, wherein the defect is an electrical open between the first feature and the second feature.
50. The system of any one of clauses 40-43 or 49, wherein determining that inspection should be performed on the first feature and the second feature comprises determining that a defect is present if the first feature and the second feature are electrically open.
51. The system of any one of clauses 40-43 or 49-50, wherein the GLV of the first feature is within a tolerance range of the GLV of the second feature.
52. The system of any one of clauses 40-43 or 49-51, wherein one of the first feature or the second feature is an insulating material and the other of the first feature or the second feature is a source or drain.
53. The system of any one of clauses 40-52, wherein the operations further comprise:
   based on the determined connectivity, determining whether to perform inspection on a third feature and the first feature;
   based on a determination that inspection should be performed on the third feature and the first feature, performing inspection on the third feature and the first feature by:
      comparing a GLV of the third feature to a GLV of the second feature using the voltage contrast image; and
      determining, based on the comparison, whether there is a presence of a defect among the first feature or the third feature.
54. The system of clause 53, wherein the first feature and the third feature are neighbors within a threshold distance of each other.
55. The system of any one of clauses 53-54, wherein the defect is a short between the first feature and the third feature.
56. The system of any one of clauses 53-55, wherein determining that inspection should be performed on the first feature and the third feature comprises determining that a defect is present if the first feature and the third feature are shorted.
57. The system of any one of clauses 53-56, wherein the GLV of the first feature is within a tolerance range of the GLV of the third feature.
58. The system of any one of clauses 53-57, wherein determining that inspection should not be performed on the first feature and the third feature comprises determining that the first feature being shorted to the third feature is not a defect.
59. The system of any one of clauses 53-58, wherein one of the first feature or the third feature is a gate and the other of the first feature or the third feature is a source or drain.
60. The system of any one of clauses 53-54, wherein the defect is an electrical open between the first feature and the third feature.
61. The system of any one of clauses 53-54 or 60, wherein determining that inspection should be performed on the first feature and the third feature comprises determining that a defect is present if the first feature and the third feature are electrically open.
62. The system of any one of clauses 53-54 or 60-61, wherein the GLV of the first feature is within a tolerance range of the GLV of the third feature.
63. The system of any one of clauses 53-54 or 60-62, wherein one of the first feature or the third feature is an insulating material and the other of the first feature or the third feature is a source or drain.
64. The system of any one of clauses 40-63, wherein the inspection comprises voltage contrast inspection or physical inspection.
65. A system for inspection, the system comprising:
   a memory storing a set of instructions; and
   one or more processors configured to execute the set of instructions to cause the system to perform operations comprising:
      based on an analysis of layout data, determining connectivity between features on a sample;
      based on the determined connectivity, determining whether to perform proxy-based voltage contrast inspection on a first feature and a second feature;
      based on a determination that inspection should be performed on the first feature and the second feature, performing a first inspection on the first feature and the second feature at a first condition by:
         obtaining a first voltage contrast image of the first and second features; and
         comparing a first grey level value (GLV) of the first feature to a first GLV of the second feature using the first voltage contrast image;
      based on a determination that the first GLV of the first feature is within a first tolerance range of the first GLV of the second feature, performing a second inspection on the first feature and the second feature at a second condition by:
         obtaining a second voltage contrast image of the first and second features; and
         comparing a second GLV of the first feature to a second GLV of the second feature using the second voltage contrast image; and
      based on a determination that the second GLV of the first feature is within a second tolerance range of the second GLV of the second feature, determining whether there is a presence of a defect among the first feature or the second feature.
66. The system of clause 65, wherein the first condition is a first setting of an inspection parameter and the second condition is a second setting of the inspection parameter.
67. The system of clause 65, wherein the inspection parameter is any one of laser wavelength directed to the sample, laser power directed to the sample, pixel size, landing energy, current, resolution, or extraction field.
68. The system of any one of clauses 65-67, wherein any one or more of the first inspection or the second inspection comprises voltage contrast inspection or physical inspection.
69. A system for inspection, the system comprising:
   a memory storing a set of instructions; and
   one or more processors configured to execute the set of instructions to cause the system to perform operations comprising:
      analyzing layout data related to a sample to determine connectivity between features on the sample;
      determining that inspection should be performed on a first feature and a second feature based on the determined connectivity, the inspection comprising:
         comparing a grey level value (GLV) of the first feature to a GLV of the second feature using a voltage contrast image of the first and second features; and
         determining, based on the comparison, whether a defect associated with the first feature and the second feature is present.
70. A system for inspection, the system comprising:
   a memory storing a set of instructions; and
   one or more processors configured to execute the set of instructions to cause the system to perform operations comprising:
      analyzing layout data related to a sample to determine connectivity between features on the sample;
      determining that inspection should be performed on a first feature and a second feature based on the determined connectivity, the inspection comprising:
         comparing a first GLV of the first feature to a first GLV of the second feature using a first voltage contrast image of the first and second features obtained at a first condition;
         based on the comparison, obtaining a second voltage contrast image of the sample at a second condition;
         comparing a second GLV of the first feature to a second GLV of the second feature; and
         determining, based on the comparison of the second GLV of the first feature to the second GLV of the second feature, whether a defect associated with the first feature and the second feature is present.
71. A system for inspection, the system comprising:
   a memory storing a set of instructions; and
   one or more processors configured to execute the set of instructions to cause the system to perform operations comprising:
      determining a relationship between points of interest (POIs), wherein the POIs are based on layout data that represents a sample;
      determining grey level values (GLVs) of the POIs; and
      determining, based on the GLVs and the relationship, a presence of a defect.
72. The system of clause 71, wherein determining the GLVs comprises:
   comparing the GLVs of any one or more of a source/drain or gate to surrounding vias; or
   comparing the GLVs of any one or more of the source/drain or the gate to surrounding oxide.
73. The system of any one of clauses 71-72, wherein determining the relationship comprises performing a logic versus schematic analysis using a schematic of the sample and the layout data.
74. The system of any one of clauses 71-73, wherein determining the relationship comprises performing logical operations on the layout data.
75. The system of any one of clauses 71-74, wherein the POIs are neighbors within a threshold distance of each other.
76. The system of any one of clauses 71-75, wherein the defect is a short between one or more of the POIs.
77. The system of any one of clauses 71-75, wherein the defect is an open between one or more of the POIs.
78. The system of any one of clauses 71-77, wherein:
   the defect is present among a first POI and a second POI; and
   the GLV of the first POI is within a tolerance range of the GLV of the second POI.
79. A method for inspection, the method comprising:
   based on an analysis of layout data, determining connectivity between features on a sample;
   based on the determined connectivity, determining whether to perform inspection on a first feature and a second feature;
   based on a determination that inspection should be performed on the first feature and the second feature, performing inspection on the first feature and the second feature by:
      obtaining a voltage contrast image of the first and second features;
      comparing a grey level value (GLV) of the first feature to a GLV of the second feature using the voltage contrast image; and
      determining, based on the comparison, whether there is a presence of a defect among the first feature or the second feature.
80. The method of clause 79, wherein the analysis of the layout data comprises performing a logic versus schematic analysis using a schematic of the sample and the layout data.
81. The method of clause 79, wherein the analysis of the layout data comprises performing logical operations on the layout data.
82. The method of any one of clauses 79-81, wherein the first feature and the second feature are neighbors within a threshold distance of each other.
83. The method of any one of clauses 79-82, wherein the defect is a short between the first feature and the second feature.
84. The method of any one of clauses 79-83, wherein determining that inspection should be performed on the first feature and the second feature comprises determining that a defect is present if the first feature and the second feature are shorted.
85. The method of any one of clauses 79-84, wherein the GLV of the first feature is within a tolerance range of the GLV of the second feature.
86. The method of any one of clauses 79-85, wherein determining that inspection should not be performed on the first feature and the second feature comprises determining that the first feature being shorted to the second feature is not a defect.
87. The method of any one of clauses 79-86, wherein one of the first feature or the second feature is a gate and the other of the first feature or the second feature is a source or drain.
88. The method of any one of clauses 79-82, wherein the defect is an electrical open between the first feature and the second feature.
89. The method of any one of clauses 79-82 or 88, wherein determining that inspection should be performed on the first feature and the second feature comprises determining that a defect is present if the first feature and the second feature are electrically open.
90. The method of any one of clauses 79-82 or 88-89, wherein the GLV of the first feature is within a tolerance range of the GLV of the second feature.
91. The method of any one of clauses 79-82 or 88-90, wherein one of the first feature or the second feature is an insulating material and the other of the first feature or the second feature is a source or drain.
92. The method of any one of clauses 79-91, further comprising:
   based on the determined connectivity, determining whether to perform inspection on a third feature and the first feature;
   based on a determination that inspection should be performed on the third feature and the first feature, performing inspection on the third feature and the first feature by:
      comparing a GLV of the third feature to a GLV of the second feature using the voltage contrast image; and
      determining, based on the comparison, whether there is a presence of a defect among the first feature or the third feature.
93. The method of clause 92, wherein the first feature and the third feature are neighbors within a threshold distance of each other.
94. The method of any one of clauses 92-93, wherein the defect is a short between the first feature and the third feature.
95. The method of any one of clauses 92-94, wherein determining that inspection should be performed on the first feature and the third feature comprises determining that a defect is present if the first feature and the third feature are shorted.
96. The method of any one of clauses 92-95, wherein the GLV of the first feature is within a tolerance range of the GLV of the third feature.
97. The method of any one of clauses 92-96, wherein determining that inspection should not be performed on the first feature and the third feature comprises determining that the first feature being shorted to the third feature is not a defect.
98. The method of any one of clauses 92-97, wherein one of the first feature or the third feature is a gate and the other of the first feature or the third feature is a source or drain.
99. The method of any one of clauses 92-93, wherein the defect is an electrical open between the first feature and the third feature.
100. The method of any one of clauses 92-93 or 99, wherein determining that inspection should be performed on the first feature and the third feature comprises determining that a defect is present if the first feature and the third feature are electrically open.
101. The method of any one of clauses 92-93 or 99-100, wherein the GLV of the first feature is within a tolerance range of the GLV of the third feature.
102. The method of any one of clauses 92-93 or 99-101, wherein one of the first feature or the third feature is an insulating material and the other of the first feature or the third feature is a source or drain.
103. The method of any one of clauses 79-102, wherein the inspection comprises voltage contrast inspection or physical inspection.
104. A method for inspection, the method comprising:
   based on an analysis of layout data, determining connectivity between features on a sample;
   based on the determined connectivity, determining whether to perform proxy-based voltage contrast inspection on a first feature and a second feature;
   based on a determination that inspection should be performed on the first feature and the second feature, performing a first inspection on the first feature and the second feature at a first condition by:
      obtaining a first voltage contrast image of the first and second features; and
      comparing a first grey level value (GLV) of the first feature to a first GLV of the second feature using the first voltage contrast image;
   based on a determination that the first GLV of the first feature is within a first tolerance range of the first GLV of the second feature, performing a second inspection on the first feature and the second feature at a second condition by:
      obtaining a second voltage contrast image of the first and second features; and
      comparing a second GLV of the first feature to a second GLV of the second feature using the second voltage contrast image; and
   based on a determination that the second GLV of the first feature is within a second tolerance range of the second GLV of the second feature, determining whether there is a presence of a defect among the first feature or the second feature.
105. The method of clause 104, wherein the first condition is a first setting of an inspection parameter and the second condition is a second setting of the inspection parameter.
106. The method of clause 104, wherein the inspection parameter is any one of laser wavelength directed to the sample, laser power directed to the sample, pixel size, landing energy, current, resolution, or extraction field.
107. The method of any one of clauses 104-106, wherein any one or more of the first inspection or the second inspection comprises voltage contrast inspection or physical inspection.
108. A method for inspection, the method comprising:
   analyzing layout data related to a sample to determine connectivity between features on the sample;
   determining that inspection should be performed on a first feature and a second feature based on the determined connectivity, the inspection comprising:
      comparing a grey level value (GLV) of the first feature to a GLV of the second feature using a voltage contrast image of the first and second features; and
      determining, based on the comparison, whether a defect associated with the first feature and the second feature is present.
109. A method for inspection, the method comprising:
   analyzing layout data related to a sample to determine connectivity between features on the sample;
   determining that inspection should be performed on a first feature and a second feature based on the determined connectivity, the inspection comprising:
      comparing a first GLV of the first feature to a first GLV of the second feature using a first voltage contrast image of the first and second features obtained at a first condition;
      based on the comparison, obtaining a second voltage contrast image of the sample at a second condition;
      comparing a second GLV of the first feature to a second GLV of the second feature; and
      determining, based on the comparison of the second GLV of the first feature to the second GLV of the second feature, whether a defect associated with the first feature and the second feature is present.
110. A method for inspection, the method comprising:
   determining a relationship between points of interest (POIs), wherein the POIs are based on layout data that represents a sample;
   determining grey level values (GLVs) of the POIs; and
   determining, based on the GLVs and the relationship, a presence of a defect.
111. The method of clause 110, wherein determining the GLVs comprises:
   comparing the GLVs of any one or more of a source/drain or gate to surrounding vias; or
   comparing the GLVs of any one or more of the source/drain or the gate to surrounding oxide.
112. The method of any one of clauses 110-111, wherein determining the relationship comprises performing a logic versus schematic analysis using a schematic of the sample and the layout data.
113. The method of any one of clauses 110-112, wherein determining the relationship comprises performing logical operations on the layout data.
114. The method of any one of clauses 110-113, wherein the POIs are neighbors within a threshold distance of each other.
115. The method of any one of clauses 110-114, wherein the defect is a short between one or more of the POIs.
116. The method of any one of clauses 110-114, wherein the defect is an open between one or more of the POIs.
117. The method of any one of clauses 110-116, wherein:
   the defect is present among a first POI and a second POI; and
   the GLV of the first POI is within a tolerance range of the GLV of the second POI.

It will be appreciated that the embodiments of the present disclosure are not limited to the exact construction that has been described above and illustrated in the accompanying drawings, and that various modifications and changes may be made without departing from the scope thereof.

## Claims

1. A non-transitory computer readable medium that stores a set of instructions that is executable by at least one processor of a computing device to cause the computing device to perform operations for inspection, the operations comprising:
analyzing layout data related to a sample to determine connectivity between features on the sample;
determining that inspection should be performed on a first feature and a second feature based on the determined connectivity, the inspection comprising:
comparing a grey level value (GLV) of the first feature to a GLV of the second feature using a voltage contrast image of the first and second features; and
determining, based on the comparison, whether a defect associated with the first feature and the second feature is present.

2. The non-transitory computer readable medium of claim 1, wherein the defect is an electrical open between the first feature and the second feature.

3. The non-transitory computer readable medium of claim 1, wherein determining that inspection should be performed on the first feature and the second feature comprises determining that a defect is present if the first feature and the second feature are electrically open.

4. The non-transitory computer readable medium of claim 1, wherein the GLV of the first feature is within a tolerance range of the GLV of the second feature.

5. The non-transitory computer readable medium of claim 1, wherein one of the first feature or the second feature is an insulating material and the other of the first feature or the second feature is a source or drain.

6. The non-transitory computer readable medium of claim 1, wherein the operations further comprise:
based on the determined connectivity, determining whether to perform inspection on a third feature and the first feature;
based on a determination that inspection should be performed on the third feature and the first feature, performing inspection on the third feature and the first feature by:
comparing a GLV of the third feature to a GLV of the second feature using the voltage contrast image; and
determining, based on the comparison, whether there is a presence of a defect among the first feature or the third feature.

7. The non-transitory computer readable medium of claim 6, wherein the first feature and the third feature are neighbors within a threshold distance of each other.

8. The non-transitory computer readable medium of claim 6, wherein the defect is a short between the first feature and the third feature.

9. The non-transitory computer readable medium of claim 6, wherein determining that inspection should be performed on the first feature and the third feature comprises determining that a defect is present if the first feature and the third feature are shorted.

10. The non-transitory computer readable medium of claim 6, wherein the GLV of the first feature is within a tolerance range of the GLV of the third feature.

11. The non-transitory computer readable medium of claim 6, wherein determining that inspection should not be performed on the first feature and the third feature comprises determining that the first feature being shorted to the third feature is not a defect.

12. The non-transitory computer readable medium of claim 6, wherein one of the first feature or the third feature is a gate and the other of the first feature or the third feature is a source or drain.

13. A non-transitory computer readable medium that stores a set of instructions that is executable by at least one processor of a computing device to cause the computing device to perform operations for inspection, the operations comprising:
analyzing layout data related to a sample to determine connectivity between features on the sample;
determining that inspection should be performed on a first feature and a second feature based on the determined connectivity, the inspection comprising:
comparing a first GLV of the first feature to a first GLV of the second feature using a first voltage contrast image of the first and second features obtained at a first condition;
based on the comparison, obtaining a second voltage contrast image of the sample at a second condition;
comparing a second GLV of the first feature to a second GLV of the second feature; and
determining, based on the comparison of the second GLV of the first feature to the second GLV of the second feature, whether a defect associated with the first feature and the second feature is present.

14. A system for inspection, the system comprising:
a memory storing a set of instructions; and
one or more processors configured to execute the set of instructions to cause the system to perform operations comprising:
analyzing layout data related to a sample to determine connectivity between features on the sample;
determining that inspection should be performed on a first feature and a second feature based on the determined connectivity, the inspection comprising:
comparing a grey level value (GLV) of the first feature to a GLV of the second feature using a voltage contrast image of the first and second features; and
determining, based on the comparison, whether a defect associated with the first feature and the second feature is present.

15. The system of claim 14, wherein the defect is an electrical open between the first feature and the second feature.
